# EUROPÄISCHE PATENTSCHRIFT

(11) **EP 2 880 331 B1**
(45) Veröffentlichungstag und Bekanntmachung des Hinweises auf die Patenterteilung: **04.01.2017**
(21) Anmeldenummer: 13740282.2
(22) Anmeldetag: 23.07.2013
(51) Int. Cl.: F16D 55/2255, F16D 65/56

(54) **VERFAHREN ZUM STEUERN EINER ELEKTRISCHEN BELAGVERSCHLEISSNACHSTELLVORRICHTUNG FÜR EINE SCHEIBENBREMSENANORDNUNG UND SCHEIBENBREMSE**
METHOD FOR CONTROLLING AN ELECTRIC LINING WEAR COMPENSATOR DEVICE FOR A DISC BRAKE ARRANGEMENT AND DISC BRAKE
PROCÉDÉ PERMETTANT DE COMMANDER UN DISPOSITIF ÉLECTRIQUE D'AJUSTAGE EN FONCTION DE L'USURE DE LA GARNITURE DESTINÉ À UN SYSTÈME DE FREIN À DISQUE, ET FREIN À DISQUE

(30) Priorität: 03.08.2012 DE 102012015377
(43) Veröffentlichungstag der Anmeldung: 10.06.2015
(73) Patentinhaber: KNORR-BREMSE Systeme für Nutzfahrzeuge GmbH, 80809 München (DE)
(72) Erfinder: MILLER, Bernhard, 71263 Weil der Stadt (DE)
(86) Internationale Anmeldenummer: PCT/EP2013/065542
(87) Internationale Veröffentlichungsnummer: WO 2014/019894

(56) Entgegenhaltungen:
- WO-A1-03/069181
- WO-A1-2005/028904
- DE-A1-102008 017 225

## Beschreibung

Die Erfindung betrifft ein Verfahren zum Steuern einer elektrischen Belagverschleißnachstellvorrichtung einer Scheibenbremsenanordnung, insbesondere für ein Kraftfahrzeug, nach dem Oberbegriff des Anspruchs 1. Die Erfindung bezieht sich auch auf eine entsprechende Scheibenbremsenanordnung und eine Scheibenbremse.

Derartige Belagverschleißnachstellvorrichtungen sind in unterschiedlichen Ausführungen bekannt, wie z.B. mechanische Nachsteller mit automatischem Einregeln eines Reibepunkts. Dabei wird bei jeder Bremsbetätigung die Nachstellvorrichtung, z.B. durch ein Zustellelement einer Zuspannvorrichtung der Scheibenbremse, aktiviert. Bei Verschleiß von Bremsbelägen und Bremsscheibe erfolgt ein automatisches Nachstellen der Beläge mittels der Nachstellvorrichtung z.B. durch eine Verstellbewegung von längenveränderlichen Druckstempeln.

EP 1 476 673 B1 beschreibt eine Scheibenbremse mit elektromotorisch angetriebener Nachstellvorrichtung und ein Verfahren zum Steuern einer Scheibenbremse.

Diese Anordnungen haben sich bewährt. Es können jedoch mechanische Mikrobewegungen und/oder Vibrationen eine Nachstellung beeinträchtigen, d.h. eine Nachstellung wird z.B. unvollständig ausgeführt, wobei ein Lüftspiel zu groß ist und dadurch entsprechenden Mehrenergie für Bremsvorgänge erfordert. Eingriffsmöglichkeiten zur Verhinderung solcher Beeinträchtigungen sind nicht bekannt.

Die Aufgabe der vorliegenden Erfindung besteht darin, ein verbessertes Verfahren zum Steuern einer Belagverschleißnachstellvorrichtung für eine Scheibenbremsenanordnung bereitzustellen.

Eine weitere Aufgabe besteht darin, eine verbesserte Scheibenbremsenanordnung zu schaffen.

Die Aufgabe wird durch ein Verfahren mit den Merkmalen des Anspruchs 1, eine Scheibenbremsenanordnung mit den Merkmalen des Anspruchs 12 und durch eine Scheibenbremse mit den Merkmalen des Anspruchs 17 gelöst.

Die elektrische Belagverschleißnachstellvorrichtung wird durch Bestromen einer Kupplungseinrichtung der elektrischen Belagverschleißnachstellvorrichtung bei einer Bewegung des Bremszustellhebels gesteuert. Die Übertragung des von diesem Bremszustellhebel bewirkten Drehmomentes auf eine Nachstellspindel kann mittels der schaltbaren Kupplungseinrichtung in einfacher Weise durch einen Schalter, z.B. ein Relais oder/und ein Halbleiterschalter, gesteuert werden.

Ein erfindungsgemäßes Verfahren zum Steuern einer elektrischen Belagverschleißnachstellvorrichtung einer Scheibenbremsenanordnung, insbesondere für ein Kraftfahrzeug, mit einer Scheibenbremse und einer Steuereinrichtung, wobei die Scheibenbremse eine Zuspannvorrichtung mit einem Bremszustellhebel aufweist, wobei die Belagverschleißnachstellvorrichtung mit dem Bremszustellhebel gekoppelt und vorzugsweise in eine Nachstellspindel der Scheibenbremse eingesetzt ist, umfasst die folgenden Verfahrensschritte. (S1) Erfassen eines Lüftspiels der Scheibenbremse; (S2) Erkennen einer Veränderung des Lüftspiels durch Vergleich mit vorher festgelegten Werten; und (S3) Steuern der elektrischen Belagverschleißnachstellvorrichtung durch Bestromen einer Elektromagnetspule.

Eine erfindungsgemäße Scheibenbremsenanordnung zur Durchführung des Verfahrens nach einem der vorhergehenden Ansprüche, weist eine Scheibenbremse, insbesondere für ein Kraftfahrzeug, mit einer Zuspannvorrichtung mit einem Bremszustellhebel, eine elektrische Belagverschleißnachstellvorrichtung, die vorzugsweise in eine Nachstellspindel der Scheibenbremse einsetzbar ist, und eine Steuereinrichtung auf, wobei die elektrische Belagverschleißnachstellvorrichtung mit dem Bremszustellhebel gekoppelt ist. Die elektrische Belagverschleißnachstellvorrichtung umfasst eine Nachstellwelle mit einem Außenlager; ein Drehantriebselement; und eine Kupplungseinrichtung zum schaltbaren Kuppeln des Drehantriebselement mit der Nachstellwelle. Die Kupplungseinrichtung ist elektrisch schaltbar mit mindestens einer Elektromagnetspule ausgebildet.

Der Bremszustellhebel kann sich bewegen, ohne dass eine Drehmomentübertragung in der elektrischen Belagverschleißnachstellvorrichtung auf die Nachstellspindel erfolgt. Nur wenn die Kupplungseinrichtung eingeschaltet ist, erfolgt eine Drehmomentübertragung auf die Nachstellspindel.

Weitere vorteilhafte Ausgestaltungen sind in den Unteransprüchen angegeben.

In einer Ausführung wird beim Erfassen des Lüftspiels der Scheibenbremse ein Hebelzustellweg des Bremszustellhebels erfasst. Auf diese kann festgestellt werden, ob sich der Bremszustellhebel in einem Bereich der Überbrückung des Lüftspiels befindet.

In einer weiteren Ausführung wird beim Erfassen des Lüftspiels der Scheibenbremse ein Reibepunkt über den Kraftschluss einer Nachstellspindel der elektrischen Belagverschleißnachstellvorrichtung ermittelt, indem der Hebelzustellweg des Bremszustellhebels und eine Verstellbewegung der Belagverschleißnachstellvorrichtung bei Bestromen der Elektromagnetspule erfasst werden. Wenn bei einer Zustellbewegung des Bremszustellhebels gleichzeitig eine Verstellbewegung erfolgt, dann aber trotz weiterer Zustellbewegung nicht mehr vorhanden ist, ist der Reibepunkt erreicht. Dies kann auch der Fall sein, wenn zu Beginn einer Zustellbewegung keine Verstellbewegung erfolgt.

Nach einer noch weiteren Ausführung ist es möglich, dass das Bestromen der Elektromagnetspule in Abhängigkeit von einer erfassten Bewegung des Bremszustellhebel erfolgt. Dies ist möglich, wenn eine Kombination von Belagverschleißsensor und Zustellhebelsensor in der Belagverschleißnachstellvorrichtung vorhanden ist.

In einer anderen Ausführung kann beim Erfassen des Lüftspiels der Scheibenbremse eine Druckmessung bei einem vorher festgelegten Bremspunkt im Vergleich mit einer vorher festgelegten Sollkennlinie erfolgen. Dadurch lässt sich eine zusätzliche Überwachung des Reibepunktes erreichen. Außerdem ist es dabei möglich, dass eine Sicherheit einer Druckregelung durch schnelle Fehlererkennung bei einem fehlerhaften Drucksensor verbessert werden kann.

Dabei kann eine Erkennung eines Reibepunktes durch Auswerten eines gemessenen statischen Bremsdrucks in Abhängigkeit einer Bewegung des Bremszustellhebels erfolgen. Hierbei kann z.B. eine Sollkennlinie in Tabellenform in einer Speichereinrichtung gespeichert sein und zum Vergleich herangezogen werden.

Das Steuern der elektrischen Belagverschleißnachstellvorrichtung durch Bestromen der Elektromagnetspule bei einer Zuspannbewegung des Bremszustellhebels zum Nachstellen der elektrischen Belagverschleißnachstellvorrichtung erfolgt dann, wenn eine Veränderung des Lüftspiels als Vergrößerung des Lüftspiels erkannt wurde.

Es ist aber möglich, dass ein zu kleines Lüftspiel wieder auf einen vorher festlegbaren Wert zurückgestellt wird. Dazu ist es in einer weiteren Ausführung vorgesehen, dass das Steuern der elektrischen Belagverschleißnachstellvorrichtung durch Bestromen der Elektromagnetspule bei einer Lösebewegung des Bremszustellhebels zum Rückstellen der elektrischen Belagverschleißnachstellvorrichtung erfolgt, wenn eine Veränderung des Lüftspiels als Verkleinerung des Lüftspiels erkannt wurde.

In einer noch weiteren Ausführung kann das Steuern der elektrischen Belagverschleißnachstellvorrichtung durch Bestromen der Elektromagnetspule beim Zuspannen der Zuspannvorrichtung kurz vor einer Bremszustellung nach Überbrückung des Lüftspiels, zu Beginn einer Bremszustellung nach Überbrückung des Lüftspiels, beim Lösen der Zuspannvorrichtung nach der Bremszustellung am Ende des Lösens der Zuspannvorrichtung, oder außerhalb der Bremszustellung erfolgen. Damit kann eine Verstellung des Bremsbelags/der Bremsbeläge als Zustellung aufgrund von Verschleiß und auch als Rückstellung erfolgen. Somit kann das Lüftspiel zwischen Bremsbelag und Bremsscheibe eingestellt werden. Eine Rückstellung ist möglich, wenn die Kupplungseinrichtung bei einer Rückbewegung des Bremszustellhebels eingeschaltet wird.

Eine weitere Ausführung sieht vor, dass das Bestromen der Elektromagnetspule mittels zumindest eines kurzen Schaltimpulses erfolgt. Es kann auch durch mehrere Schaltimpulse erfolgen, die z.B. veränderbar sind. So kann das Bestromen der Elektromagnetspule beispielsweise mittels PWM (Pulsweitenmodulation) erfolgen.

Die Elektromagnetspule kann auch mittels PWM oder anderer geeigneter Ansteuerungen so bestromt werden, dass damit z.B. eine einstellbare Überlastkupplung gebildet werden kann.

Nach einer weiteren Ausführung ist vorgesehen, dass die Scheibenbremsenanordnung die elektrische Belagverschleißnachstellvorrichtung mit mindestens einem Belagverschleißsensor, welcher z.B. als Winkelsensor ausgebildet sein kann, aufweist. Der Belagverschleißsensor kann auch Gegenstand einer eigenständigen Anmeldung sein kann. Damit ist es möglich, einen Nachstellvorgang in Abhängigkeit von dem Verschleiß von Bremsbelägen und Bremsscheibe gezielt auszuführen, indem die Kupplungseinrichtung entsprechend ein- und ausgeschaltet wird.

Nach einer anderen Ausführung ist der mindestens eine Belagverschleißsensor zumindest teilweise ein Bestandteil der Anschlusseinrichtung. Damit ist ein besonders kompakter und einfacher Aufbau möglich.

In einer anderen Ausführung der Scheibenbremsenanordnung weist die elektrische Belagverschleißnachstellvorrichtung mindestens einen Zustellhebelsensor auf, welcher auch Gegenstand einer eigenständigen Anmeldung sein kann, auf. Auch dieser kann zumindest teilweise ein Bestandteil einer Anschlusseinrichtung und z.B. auch als Winkelsensor ausgebildet sein. Hierbei kann ebenfalls wie bei dem Belagverschleißsensor ein Zustellsensorelement in der Anschlusseinrichtung angeordnet sein und mit einem Zustellgeberelement zusammenwirken, welches mit dem Bremszustellhebel gekoppelt ist.

In einer Ausführung kann die Steuereinrichtung an der elektrischen Belagverschleißnachstellvorrichtung angeordnet sein und damit ein so genannte Stand-Alone-Version bilden. Auf diese Weise sind Nachrüstungen bestehender, serienmäßiger Scheibenbremsen möglich, da z.B. bisherige elektromechanische Potentiometer elektronisch nachbildbar sind, wobei vorhandene Anschlüsse für Potentiometer an einem Steuergerät durch die nachgebildeten Anschlüsse, z.B. durch die Steuereinrichtung, weiterhin verwendbar sind.

Die Belagverschleißnachstellvorrichtung weist eine Anschlusseinrichtung auf, welche mit der mindestens einen Elektromagnetspule elektrisch leitend verbunden ist. Mittels einer Steckverbindung ist die Elektromagnetspule elektrisch angeschlossen. Dadurch ist es möglich, die Anschlusseinrichtung bei Wartung oder Austausch einfach und schnell zu wechseln, ohne dass besondere elektrische Verbindungen mittels Werkzeug gelöst oder hergestellt werden müssen.

In einer alternativen Ausführung der Scheibenbremsenanordnung kann die Steuereinrichtung Bestandteil einer Steuerung, z.B. eines Druckregelmoduls oder/und Bremssteuergerätes, sein. So wird ein großer Einsatzbereich geschaffen.

Mittels der elektrischen Belagverschleißnachstellvorrichtung ist durch die Elektromagnetkupplung nicht nur eine Belagverschleißnachstellung sondern auch eine Belagrückstellung, z.B. im Fehlerfall oder bei Austausch der Bremsbeläge und Wartung, möglich. Somit kann auch eine Lüftspielregelung auf einfache Weise ermöglicht werden. Dabei ist die Antriebsquelle wie bisher bei mechanischen Nachstellvorrichtungen der Bremszustellhebel.

Die Belagverschleißnachstellvorrichtung weist eine Anschlusseinrichtung auf, die in einer Version ein Analogsignal des Belagverschleißsensors und des Zustellhebelsensors (wenn eingesetzt) zur Verfügung stellt. Hierzu weist die Anschlusseinrichtung eine Steuereinrichtung, z.B. einen Mikrocomputer bzw. Kleinrechner auf. Die Anschlusseinrichtung kann aber auch die Sensorsignale digital ohne Steuereinrichtung an ein übergeordnetes Steuergerät mit entsprechender Steuereinrichtung übertragen.

Bei einem erkannten Ausfall der elektrischen Bremse (z.B. Fehlen einer 5-V-Versorgungsspannung eines Potentiometers) kann die Nachführung des Bremsbelags sichergestellt werden. Dies erfolgt durch Ansteuerung der Elektromagnetspule nach erkanntem, überbrücktem Lüftspiel, solange die Bremse noch zustellt, jedoch nicht beim Lösen der Bremse.

Die Stand-Alone-Version ist kompatibel zu bisherigen Ausführungen und somit austauschbar zur Nachrüstung.

Die Belagverschleißnachstellvorrichtung weist außerdem folgende Vorteile auf:
- Autarke elektrische Belagerkennung und Nachstellung
- Analoge Belagverschleißausgabe
- Hohes mögliches Drehmoment zur Verstellung mittels Zahnkupplung
- Sichere Haltekraft durch eine, vorzugsweise zwei Reibflächen (Anstelle von Reibflächen sind auch Rampenverzahnungen möglich)
- Einfacher robuster Aufbau
- Eigene Versorgungsspannung
- Belagverschleißnachführung auch im Notbetrieb der Bremse (Back Up)

Die Belagverschleißnachstellvorrichtung kann zudem eine Überlastkupplung, z.B. eine Kugelrampenkupplung oder Schrägverzahnung aufweisen.

Eine Scheibenbremse, insbesondere für ein Kraftfahrzeug, mit einer Zuspannvorrichtung mit einem Bremszustellhebel und mindestens einer Nachstellspindel, weist die oben beschriebene mindestens eine elektrische Belagverschleißnachstellvorrichtung der oben beschriebenen Scheibenbremsenanordnung auf.

Die Erfindung wird nun anhand beispielhafter Ausführungen mit Bezug auf die beigefügten Zeichnungen näher erläutert. Hierbei zeigen:
- Fig. 1: eine schematische Schnittansicht eines ersten Ausführungsbeispiels einer erfindungsgemäßen Scheibenbremsenanordnung mit einer Belagverschleißnachstellvorrichtung;
- Fig. 2: eine schematische Schnittansicht eines zweiten Ausführungsbeispiels der erfindungsgemäßen Scheibenbremsenanordnung;
- Fig. 3: ein schematisches Blockschaltbild des ersten Ausführungsbeispiels nach Fig. 1;
- Fig. 4: ein schematisches Blockschaltbild des zweiten Ausführungsbeispiels nach Fig. 3;
- Fig. 5 - 6: schematische Diagramme zur Erfassung eines Lüftspiels;
- Fig. 7: ein schematisches Diagramm zur Vergrößerung eines Lüftspiels;
- Fig. 8: ein weiteres schematisches Diagramm zur Erkennung eines Lüftspiels;
- Fig. 9: ein weiteres schematisches Diagramm zur Vergrößerung eines Lüftspiels; und
- Fig. 10: ein schematisches Diagramm zur Verkleinerung eines Lüftspiels.

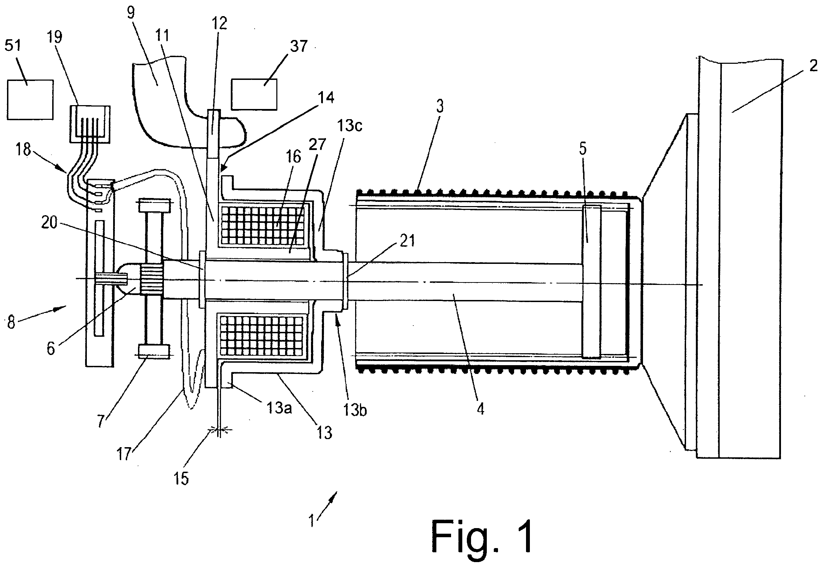

Fig. 1 ist eine schematische Schnittansicht eines ersten Ausführungsbeispiels einer erfindungsgemäßen Scheibenbremsenanordnung mit einer Belagverschleißnachstellvorrichtung 1 in einer gelösten Stellung.

Die Scheibenbremsenanordnung in diesem ersten Ausführungsbeispiel umfasst eine Scheibenbremse, die Belagverschleißnachstellvorrichtung 1 und eine Steuereinrichtung 51.

Die Scheibenbremse ist hier von ihrer Zuspannseite gezeigt und weist einen nicht dargestellten Bremssattel auf, der eine ebenfalls nicht gezeigte Bremsscheibe übergreift. An der Bremsscheibe sind beidseitig Bremsbeläge 2 angeordnet, von denen hier nur der zuspannseitige Bremsbelag 2 mit einer Nachstellspindel 3 der Belagverschleißnachstellvorrichtung 1, mit welcher der Bremsbelag 2 verbunden ist, abgebildet ist. Der andere Bremsbelag ist im Bremssattel festgelegt. Der Bremssattel kann zum Beispiel ein Schiebesattel sein. Ein Bremszustellhebel 9 zum Zuspannen der Scheibenbremse ist angedeutet. Die Nachstellspindel 3 ist mit einem Außengewinde versehen und in einen nicht gezeigten Druckstempel eingeschraubt, welcher mit dem Bremszustellhebel 9 zusammenwirkt. Die Scheibenbremse kann mehr als einen Druckstempel mit jeweiliger Nachstellspindel 3 besitzen.

Die Nachstellspindel 3 der Belagverschleißnachstellvorrichtung 1 ist außerdem mit einem Innengewinde versehen, welches mit einem Abtriebsrad 5 einer Nachstellwelle 4 in Eingriff steht. Das Abtriebsrad 5 ist hier an einem Ende der Nachstellwelle 4, welches zum Bremsbelag 2 weist, verdrehfest angebracht.

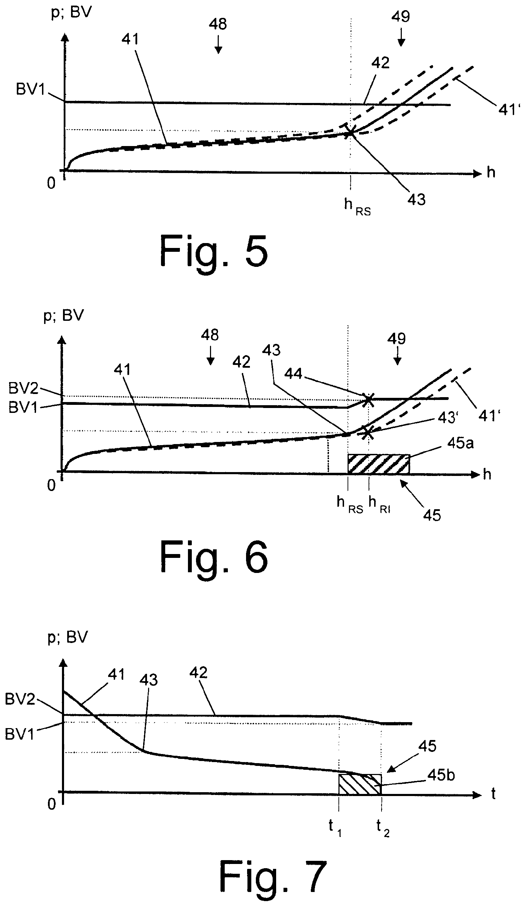

Ein Abstand zwischen dem Bremsbelag 2 bzw. den Bremsbelägen 2 und der Bremsscheibe wird als Lüftspiel bezeichnet. Bei einem Bremsvorgang wird bei Betätigung der Bremse zunächst das Lüftspiel überbrückt, indem der Bremsbelag 2 gegen die Bremsscheibe der Bremse verstellt wird. Dem Lüftspiel ist auch ein Hebelzustellweg h (siehe Fig. 5-10) des Bremszustellhebels 9 zugeordnet. Aufgrund des Verschleißes des Bremsbelags 2 und auch der Bremsscheibe wird das Lüftspiel vergrößert. Die Belagverschleißnachstellvorrichtung 1 dient zur Einstellung des Lüftspiels auf einen vorher einstellbaren üblichen Wert. Unter dem Begriff "Einstellung" ist hierbei sowohl ein Zustellen in Richtung auf die Bremsscheibe zur Verkleinerung des Lüftspiels als auch ein Rückstellen von der Bremsscheibe weg zur Vergrößerung des Lüftspiels zu verstehen.

Der Begriff "Reibepunkt" ist der Punkt, in welchem der Bremsbelag 2 an der Bremsscheibe der Scheibenbremse anliegt. Der Reibepunkt wird beim Zuspannen nach Überbrückung des so genannten Lüftspiels erreicht. Weiteres Zuspannen bewirkt dann durch Anpressen des Bremsbelags 2 an die Bremsscheibe einen Bremsvorgang bzw. eine Bremsung. Ein Lösen der Zuspannvorrichtung bewirkt eine Umkehrung des oben beschriebenen Vorgangs. Dies wird im Zusammenhang mit den Figuren 5 bis 10 noch ausführlich erläutert.

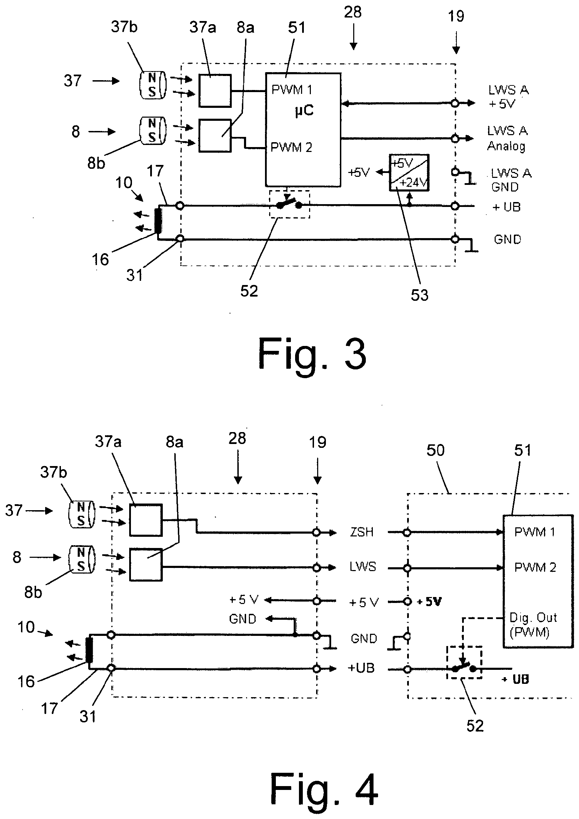

Das andere Ende der Nachstellwelle 4 ist in diesem ersten Ausführungsbeispiel als Übertragungsende 6 mit einem Übertragungsrad 7 versehen und mit einem Belagverschleißsensor 8 gekoppelt. Das Übertragungsrad 7 ist z.B. als Kettenzahnrad ausgebildet und über eine Kette 25 (siehe Fig. 3) mit einer weiteren, nicht gezeigten Nachstellspindel gekoppelt. Der Belagverschleißsensor 8 weist in dieser Ausführung z.B. ein Potentiometer mit oder ohne Getriebe auf. Das Potentiometer kann auch ein Mehrgangpotentiometer sein und ist über eine Verbindungsleitung 18 mit einem Verbindungselement 19 elektrisch verbunden. Das Verbindungselement 19 dient zur elektrischen Verbindung mit der Steuereinrichtung 51 über eine nicht dargestellte Leitung. Die Steuereinrichtung 51 kann z.B. in einem Bremssteuergerät oder in einem anderen Steuergerät angeordnet sein. Das Verbindungselement kann z.B. als mehrpoliger, bespielsweise fünfpolig, Winkelstecker ausgebildet sein. Ein elektrischer Widerstand des Mehrgangpotentiometers ist von einem Drehwinkel der angekoppelten Nachstellwelle 4 veränderbar und proportional zu dem Belagverschleiß des Bremsbelags 2 bzw. der Bremsbeläge der Scheibenbremse.

Die Belagverschleißnachstellvorrichtung 1 ist als elektrische Belagverschleißnachstellvorrichtung 1 ausgebildet. Dazu ist die Nachstellwelle 4 in dem Abschnitt, der sich an das Übertragungsende 6 anschließt, mit einer elektrisch schaltbaren Kupplungseinrichtung 10 gekoppelt. Die Kupplungseinrichtung 10 ist als elektromagnetische Kupplung ausgebildet und weist ein Drehantriebselement 11 mit einem Zahneingriff 12, einen Kupplungsdeckel 13 und eine Elektromagnetspule 16 auf. Das Drehantriebselement 11 mit dem Zahneingriff 12 ist an der Eingangsseite der Kupplungseinrichtung 10 angebracht, wobei der Zahneingriff 12 mit dem Bremszustellhebel 9 zusammenwirkt. Der Zahneingriff 12 ist radial von der Nachstellwelle 4 entfernt an einer Scheibe des Drehantriebselementes 11 angeformt. Diese Scheibe ist mit einem Spulenträger 27, der hier ein Rohrabschnitt ist, drehfest verbunden. Der Spulenträger 27 trägt die ringförmige Elektromagnetspule 16 und ist auf der Nachstellwelle 4 axial verschiebbar. Die axiale Verschiebbarkeit des Drehantriebselementes 11 und des mit ihm in diesem Ausführungsbeispiel verbundenen Spulenträgers 27 wird durch Axialanschläge 20, 21 auf der Nachstellwelle 4 begrenzt. Die Elektromagnetspule 16 ist über eine Leitung 17 elektrisch mit der Verbindungsleitung 18 und somit mit dem Verbindungselement 19 und darüber mit der Steuereinrichtung 51 verbunden.

Die ringförmige Elektromagnetspule 16 auf dem Spulenträger 27 ist von dem Kupplungsdeckel 13 haubenförmig umgeben. Der Kupplungsdeckel 13 ist an seiner zur Scheibe des Drehantriebselementes 11 weisenden Seite mit einem flanschartigen Kupplungsbereich 13a versehen und in der hier in Fig. 1 gezeigten gelösten Stellung über einen Kupplungsspalt 15 von einem mit ihm korrespondierenden Bereich beabstandet. Dieser Kupplungsbereich 13a und der mit ihm korrespondierende Bereich des Drehantriebselementes 11 bilden einen Kupplungsabschnitt 14. Diese Bereiche des Kupplungsabschnitts 14 können z.B. mit speziellen Reibschichten oder Reibbelägen ausgebildet sein.

Der Kupplungsdeckel 13 erstreckt sich von dem Kupplungsbereich 13a parallel zur Nachstellwelle 4 zu der zum Bremsbelag 2 weisenden Seite, auf welcher der Kupplungsdeckel 13 mit einem Wandabschnitt 13c in radialer Richtung bis zu einem zentralen flanschartigen Verbindungsabschnitt 13b verschlossen ist. Der flanschartige Verbindungsabschnitt 13b ist drehfest mit der Nachstellwelle 4 verbunden und zusätzlich axial über den Axialanschlag 21 festgelegt.

Die Belagverschleißnachstellvorrichtung 1 ist weiterhin mit einem Zustellhebelsensor 37 versehen, der unten noch näher erläutert wird. Der Zustellhebelsensor 37 erfasst eine Bewegung, hier eine Schwenkbewegung, des Bremszustellhebels 9.

Zum Verdrehen der Nachstellspindel 3 zum Einstellen, d.h. Nachstellen oder Rückstellen des Bremsbelags 2 wird die Bewegung des Bremszustellhebels 9 beim Zuspannen bzw. Lösen der Scheibenbremse genutzt. Wenn eine Einstellung des Bremsbelags 2 erfolgen soll, wird die Elektromagnetspule 16 eingeschaltet, d.h. mit Strom über die Leitung 17 versorgt. Durch die dabei erzeugte elektromagnetische Wirkung entstehen magnetische Kraftlinien, welche durch das Drehantriebselement 11, den Kupplungsdeckel 13 und auch zum Teil durch die Nachstellwelle 4 verlaufen. Das axial verschiebbare Drehantriebselement 11 wird dabei auf der Nachstellwelle 4 mit dem flanschartigen Kupplungsbereich 13a des Kupplungsdeckels 13 über die zugehörigen Kupplungselemente, z.B. Reibflächen oder Reibbeläge, zusammengekuppelt. Dabei schließt sich der Kupplungsspalt 15, was leicht vorstellbar ist. Die Elektromagnetspule 16, welche auf dem mit dem Drehantriebselement 11 fest verbundenen Spulenträgers 27 angebracht ist, verschwenkt ebenfalls mit der Schwenkbewegung des Drehantriebselementes 11. Die Leitung 17 ist dabei flexibel ausgebildet, z.B. als Litzendrähte oder als flexible Leiterfolie.

Bei einer Zuspannbewegung des Bremszustellhebels 9 wird nun über den Zahneingriff 12 das Drehantriebselement 11 verschwenkt und über die aktivierte, d.h. elektrisch eingeschaltete, Kupplungseinrichtung 10 ein Drehmoment über den Kupplungsabschnitt 14 auf den Kupplungsdeckel 13 und auf die Nachstellwelle 4 übertragen. Durch ein solches Verdrehen der Nachstellwelle 4 wird die Nachstellspindel 3 über das Abtriebsrad 5 ebenfalls verdreht und bewirkt mit ihrem Außengewinde in dem Druckstempel eine axiale Verstellung des Bremsbelags 2 auf die Bremsscheibe zu, um einen Verschleiß der Bremsbelags 2 auszugleichen. Bewegt sich der Bremszustellhebel 9 beim Lösen zurück in seine Ausgangslage, wird die Elektromagnetspule 16 zuvor ausgeschaltet, also nicht mehr bestromt, so dass keine Drehmomentübertragung vom Bremszustellhebel 9 auf die Nachstellwelle 4 mehr erfolgt.

Die Drehmomentübertragung der Kupplungseinrichtung 10 ist so ausgelegt, dass bei nicht vorhandenem Belagverschleiß, also bei nicht nachzustellendem Bremsbelag 2, ein Durchrutschen der Kupplungseinrichtung 10 erfolgen kann.

Außerdem kann anstelle einer Nachstellbewegung die Kupplungseinrichtung 10 auch nur bei der Rückbewegung des Bremszustellhebels 9 aktiviert werden, wodurch eine Rückstellung des Bremsbelags 2 möglich ist.

Die Aktivierung der Kupplungseinrichtung 10 kann anhand unterschiedlicher Kriterien erfolgen, wie z.B. nach einer festlegbaren Anzahl von Zuspannvorgängen und gemessenem Belagverschleiß mittels des Belagverschleißsensors 8. Eine Aktivierung der Kupplungseinrichtung 10 zum Rückstellen des Bremsbelags 2 kann z.B. im Fehlerfall und zum Bremsbelagwechsel und durch Betätigen des Bremszustellhebels 9 erfolgen. Außerdem ist es möglich, die Belagverschleißnachstellvorrichtung 1 mittels Aktivierung der Kupplungseinrichtung 10 zurückzustellen, wenn der Bremsbelag 2 ohne Zuspannung an der Bremsscheibe anliegt und schleift. Dies kann wiederum durch verschiedene Kriterien festgestellt werden, wie z.B. durch Temperatursensoren an geeigneter Stelle in der Nähe des Bremsbelags 2 bzw. dessen Trägers.

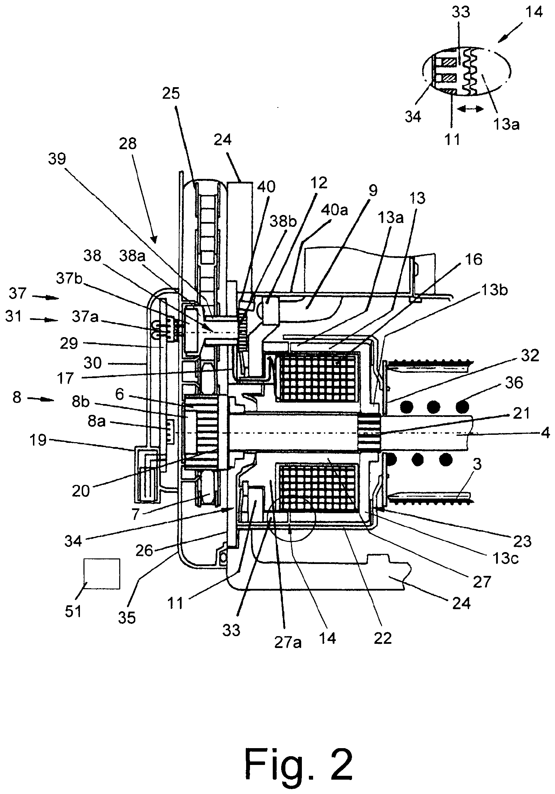

In Fig. 2 ist eine schematische Schnittansicht eines zweiten Ausführungsbeispiels der erfindungsgemäßen Scheibenbremsenanordnung dargestellt.

Die Kupplungseinrichtung 10 ist hier ebenfalls als elektromagnetische Kupplung ausgebildet und weist das Drehantriebselement 11, den Kupplungsdeckel 13, den Kupplungsabschnitt 14 und die Elektromagnetspule 16 auf. Das Drehantriebselement 11 ist im Unterschied zum ersten Ausführungsbeispiel mit einem Kupplungselement 33 gekoppelt, welches über den Kupplungsabschnitt 14 mit dem Kupplungsdeckel 13 in Eingriff bringbar ist.

Im Unterschied zum ersten Ausführungsbeispiel ist die Elektromagnetspule 16 feststehend auf dem Spulenträger 27 angebracht. Der Spulenträger 27 ist hier ein Rohrabschnitt, der mit einem ortsfesten Außenlager 26 in unten noch näher erläuterter Weise gekoppelt ist, und führt im aktivierten Zustand bei Verschwenkbewegungen des Drehantriebselementes 11 keine mit diesem verbundene Schwenkbewegungen aus.

Das Außenlager 26 ist mit seinem als Scheibe ausgebildeten zum Übertragungsende 6 der Nachstellwelle 4 weisenden Abschnitt in einem Bremsengehäuse 24 der Scheibenbremse, die nicht näher dargestellt ist, drehfest angebracht. Diese Scheibe des Außenlagers 26 kann z.B. aus einem Kunststoffwerkstoff hergestellt sein. Das Außenlager 26 bildet somit eine Lagerung für die Nachstellwelle 4 im Bremsengehäuse 24.

Zum Außenlager 26 hin weisend besitzt der Spulenträger 27 einen Scheibenabschnitt 27a mit einer im zentralen Bereich kugelförmigen Schalenaufnahme, welche mit einem entsprechenden kugelförmigen Vorsprung der Scheibe des Außenlagers 26 korrespondiert, diesen aufnimmt und darüber mit dem Außenlager zusammenwirkt. Das Außenlager 26 ist weiterhin mit einem Verdrehschutz bei der Leitung 17 der Spulenanschlussdrähte der Elektromagnetspule 16 versehen. Somit können Winkelbewegungen der Belagverschleißnachstellvorrichtung 1 während einer Betätigung ausgeglichen werden. Die Leitung 17 ist lediglich am Ausgang zur Steckverbindung 31 an einem Spulenkörper der Elektromagnetspule 16 fixiert, so dass sie die Winkelbewegungen (ca. ± 0,5°) sich biegend ausgleichen können.

Das Drehantriebselement 11 mit dem Zahneingriff 12 ist an der Eingangsseite der Kupplungseinrichtung 10 angebracht, wobei der Zahneingriff 12 mit dem Bremszustellhebel 9 zusammenwirkt. Der Zahneingriff 12 ist radial von der Nachstellwelle 4 entfernt an der Scheibe des Drehantriebselementes 11 angeformt.

Der Kupplungsdeckel 13 erstreckt sich in diesem zweiten Ausführungsbeispiel auch von dem Kupplungsbereich 13a parallel zur Nachstellwelle 4 zu der zum Bremsbelag 2 weisenden Seite, und ist mit dem Wandabschnitt 13c in radialer Richtung bis zu dem zentralen flanschartigen Verbindungsabschnitt 13b verschlossen. Der flanschartige Verbindungsabschnitt 13b ist auch hier drehfest mit der Nachstellwelle 4 verbunden.

Ein Anschlagbegrenzungselement 22 ist als eine topfförmige Abdeckung der Kupplungseinrichtung 10 ausgebildet und im Bereich des Bremszustellhebels 9 mit einer Aussparung versehen. Eine zusätzliche Reibfläche, die z.B. als separate Reibscheibe oder bearbeitete Oberfläche des Wandabschnitts 13c oder der gegenüberliegenden Innenseite des Anschlagbegrenzungselementes 22 ausgebildet ist, für einen Eigenverdrehschutz ermöglicht ein Reibabschnitt 23, welcher mit dem Kupplungsdeckel 13, d.h. mit dem Randbereich des hier geschlossenen Wandabschnitts 13c zusammenwirkt. Das Anschlagbegrenzungselement 22 ist in Richtung zur Nachstellspindel 3 hin mit einer Druckscheibe 32 gekoppelt, die wiederum mit einer Zuspannfeder 36 zusammenwirkt und die Nachstellspindel 4 stirnseitig abdeckt. Die Zuspannfeder 36 drückt über die Druckscheibe 32 mit der Innenseite des Wandabschnitts 13c gegen den Reibabschnitt 23.

In Fig. 2 ist auch eine Kette 25 gezeigt, welche als Drehmomentübertragungsglied das Übertragungsrad 7 mit einem anderen Übertragungsrad einer weiteren, nicht gezeigten Nachstellwelle verbindet. Die Kette 25 ist mit einer Abdeckung 35 abgedeckt, die in nicht näher dargestellter Weise mit dem Bremsengehäuse 24 verbunden ist. Auf dieser Abdeckung 35 ist im Bereich des Übertragungsendes 6 der Nachstellwelle 4 eine Anschlusseinrichtung 28 angeordnet.

Die Anschlusseinrichtung 28 umfasst das Verbindungselement 19, eine Leiterplatte 29, die Steckverbindung 31 und den Belagverschleißsensor 8. Die Verbindungsleitungen 18 (siehe Fig. 1) sind hier als Leiterbahnen der Leiterplatte 29 ausgebildet und verbinden einerseits die Steckverbindung 31 und ein Verschleißsensorelement 8a mit dem Verbindungselement 19.

Das Verbindungselement 19 kann z.B. als Winkelstecker ausgebildet sein. Die Steckverbindung 31 bildet eine steckbare Verbindung zwischen der Leiterplatte 29 und der Leitung 17, was nicht näher gezeigt ist.

An der zum Bremsbelag 2 hin weisenden Seite der Leiterplatte 29 ist der Stirnseite des Übertragungsendes 6 der Nachstellwelle 4 gegenüber liegend das Verschleißsensorelement 8a, z.B. ein Hall-Sensorelement, angeordnet, welches mit einem Verschleißgeberelement 8b, z.B. ein Permanentmagnet, das in dem Übertragungsende 6 der Nachstellwelle 4 platziert ist, als Winkelsensor zusammenwirkt. Auch das Verschleißsensorelement 8a ist mit den Anschlusskontakten des Verbindungselementes 19 elektrisch verbunden, so dass z.B. ein Stecker sowohl für die Übertragung der elektrischen Leistung für die Elektromagnetspule 16 als auch der elektrischen Signale des Belagverschleißsensors 8 verwendbar ist.

Das Verschleißsensorelement 8a erzeugt in Abhängigkeit von der Winkelstellung des Verschleißgeberelementes 8b ein zu der Winkelstellung proportionales elektrisches Signal (analog oder digital), welches in einer zugehörigen Auswerteschaltung ausgewertet wird und als Maß für den Verschleiß der Bremsbeläge 2 und auch der Bremsscheibe der Scheibenbremse weiter verwendet wird. Dies wird unten noch näher beschrieben.

Die Anschlusseinrichtung 28 ist in einem Gehäuse 30 angeordnet und gegen äußere Einflüsse (Eindringen von Staub und Feuchtigkeit, IP-Schutzart) und Zugriff geschützt. Das Gehäuse 30 ist modulartig auf die Abdeckung 35 der Kette 25 aufgesteckt und z.B. mittels gemeinsam genutzter Schrauben befestigt. In einer anderen, nicht dargestellten, aber vorstellbaren Ausführung kann die Anschlusseinrichtung 28 z.B. mit dem Außenlager 26 verbunden sein.

Der Zustellhebelsensor 37 umfasst ein Zustellsensorelement 37a, ein Zustellgeberelement 37b und eine Trägerwelle 38. Das Zustellsensorelement 37a kann wie das Verschleißsensorelement 8a z.B. ein Hall-Sensorelement sein und ist an der zum Bremsbelag 2 weisenden Seite der Leiterplatte 29 der Anschlusseinrichtung 28 angeordnet. Der Zustellhebelsensor 37 ist hier wie der Belagverschleißsensor 8 aufgebaut, wobei das Zustellsensorelement 37a mit dem Zustellgeberelement 37b als Winkelsensor zusammenwirkt. Das Zustellgeberelement 37b ist z.B. auch ein Permanentmagnet, der in einem Trägerabschnitt 38a an einem verdickten Ende der Trägerwelle 38 angeordnet ist. Der sich daran zum Bremsbelag 2 hin erstreckende Abschnitt der Trägerwelle 38 weist einen geringeren Durchmesser als der Trägerabschnitt 38a auf und ist in einem Lager 39, z.B. einer Messing- oder Kunststoffbuchse, verdrehbar in einem Randabschnitt der Scheibe des Außenlagers 26 aufgenommen. Die Trägerwelle 38 erstreckt sich parallel zur Achse der Nachstellwelle 4 bis über einen Flanschabschnitt 11a des Drehantriebselementes 11. In einer alternativen Ausführung schneidet sich ein Achsdrehpunkt der Trägerwelle 38 mit einem Achsdrehpunkt des Lagers des Bremszustellhebels 9. Dies ermöglicht eine optimale Funktion des Winkelgetriebes, d.h. das Winkelgetriebe ist weitgehend verschleißfrei.

In dieser Variante ist der Antrieb der Trägerwelle 38 des Zustellhebelsensors 37 mit einem Zahnsegmenthalter 40a für ein Zahnsegment 40 ausgebildet. Dabei ist der Zahnsegmenthalter 40a direkt an dem Bremszustellhebel 9 angebracht. Das Zahnsegment 40 steht dabei auf der von der Nachstellwelle 4 abgewandten Seite der Trägerwelle 38 mit der Trägerverzahnung 38b in Eingriff. Der Zahnsegmenthalter 40a kann z.B. ein Stanzbiegeteil aus Blech sein. Dabei kann er eine bestimmte Elastizität für einen Axialspielausgleich aufweisen. Das Zahnsegment 40 ist schräg angeordnet, wodurch Winkelfehler minimiert werden können.

Bei einer Verschwenkung des Bremszustellhebels 9 verschwenkt das Drehantriebselement 11 und ebenfalls das Zahnsegment 40. Dabei wird über die in Eingriff stehenden Verzahnungen des Zahnsegments 40 und der Trägerverzahnung 38b die Trägerwelle 38 verschwenkt und gleichzeitig das Zustellgeberelement 37b des Zustellhebelsensors 37. Auf diese Weise wird eine Verschwenkbewegung des Bremszustellhebels 9 durch den Zustellhebelsensor 37 erfasst und als elektrisches Analog- oder/und Digitalsignal über die Leiterplatte 29 an das Verbindungselement 19 zur weiteren Verwendung, die unten noch näher erläutert wird, weitergeleitet. Das Verbindungselement 19 ist somit für die Übertragung der elektrischen Leistung für die Elektromagnetspule 16 als auch der elektrischen Signale des Belagverschleißsensors 8 und des Zustellhebelsensors 37 verwendbar.

Das Drehantriebselement 11 ist auf einem Absatz des Scheibenabschnitts 27a verschwenkbar angebracht. In Richtung auf das Übertragungsende 6 der Nachstellwelle 4 hin ist das Drehantriebselement 11 axial festgelegt, z.B. durch einen Wellensicherungsring, d.h. das Drehantriebselement 11 ist axial nicht verschiebbar. In Gegenrichtung dazu, d.h. in Richtung auf den Kupplungsdeckel 13 hin ist das Drehantriebselement 11 mit dem Kupplungselement 33 drehfest gekoppelt, welches auf Höhe des Kupplungsdeckels 13 der Kupplungseinrichtung 10 liegt und axial verschiebbar ist. Der Kupplungsdeckel 13 erstreckt sich parallel zur Achse der Nachstellwelle 4. Der aus dem Kupplungselement 33 und dem Kupplungsbereich 13a gebildete Kupplungsabschnitt 14 ist als Zahnkupplung mit schrägem Winkel ausgeführt. In der vergrößerten Ausschnittsdarstellung in Fig. 2 rechts oben ist die Verzahnung dargestellt. Das Kupplungselement 33 weist auf der zum Bremsbelag 2 weisenden Seite die Kupplungszähne des Kupplungsabschnitts 14 auf. Die Kupplungszähne wirken mit korrespondierenden Kupplungszähnen des Kupplungsbereichs 13a des Kupplungsdeckels 13 zusammen. Auf der gegenüberliegenden Seite der Kupplungszähne des Kupplungselementes 33 erstrecken sich Fortsätze des Kupplungselementes 33 durch das Drehantriebselement 11 hindurch. Die Enden dieser Fortsätze des Kupplungselementes 33 stehen außerdem auf der zum Übertragungsende 6 der Nachstellwelle 4 weisenden Seite mit einer Rückstellfeder 34, z.B. ein umlaufender federnder Blechring, in Kontakt. Die Rückstellfeder 34 dient zur Rückstellung der Kupplungseinrichtung 10 in die gelöste Stellung, welche in Fig. 2 gezeigt ist. In der gelösten Stellung stehen die Kupplungszähne des Kupplungsabschnitts 14 außer Eingriff. Mit anderen Worten, das Kupplungselement 33 wird bei Bestromung der Elektromagnetspule 16 axial in Richtung auf den Bremsbelag 2 hin verschoben (Doppelpfeil) und die Kupplungszähne des Kupplungselementes 33 kommen mit den Kupplungszähnen des Kupplungsdeckels 13 in Eingriff. Mittels der drehfesten Verbindung (Fortsätze des Kupplungselementes 33) steht das Kupplungselement 33 weiterhin auch in Eingriff mit dem Drehantriebselement 11 und kann auf diese Weise die Schwenkbewegung des Drehantriebselementes 11 auf den Kupplungsdeckel 13 und somit auf die Nachstellwelle 4 übertragen.

In diesem zweiten Ausführungsbeispiel kann die Elektromagnetspule 16 kleiner als in den vorhergehenden ausgebildet sein, da sie nur die elektromagnetische Kraft zum Einkuppeln des Kupplungsabschnitts 14, nämlich für das Ineingriffbringen der Verzahnungen aufbringen muss. Bei diesem Einkuppeln müssen keine Reibbeläge mit einer bestimmten Normalkraft zur Übertragung eines Drehmomentes aufeinander gepresst werden. Das Drehmoment wird durch die in Eingriff gebrachten Zähne formschlüssig übertragen.

Der schräge Winkel der Kupplungszähne des als Zahnkupplung ausgebildeten Kupplungsabschnitts 14 ist so ausgelegt, dass sich im Überlastfall die Kupplungszähne des Kupplungsabschnitts 14 lösen. Dieser schräge Winkel kann z.B. im Bereich von 20° liegen. Die Übergänge der Flanken der Kupplungszähne zu den Zahnköpfen der Kupplungszähne können gerundet sein, um einen weichen Eingriff zu ermöglichen.

Durch eine Anpassung der Magnetfeldstärke der Elektromagnetspule 16, z.B. mittels einer PWM-Ansteuerung (PWM: Pulsweitenmodulation) kann der Überlastpunkt variiert werden. Es ist außerdem möglich, mittels der PWM-Ansteuerung die Haltereibung samt Reibkraft der Nachstellspindel 3 zu ermitteln. Damit lässt sich das Überlastdrehmoment präzise mittels korrigierter PWM-Ansteuerung erfassen.

Um störende Einflüsse der schräg eingeleiteten Zustellkraft des Bremszustellhebels 9 aufgrund eines Achshöhenversatzes zwischen Lagerung des Bremszustellhebels 9 und der Belagverschleißnachstellvorrichtung 1 zu vermeiden, kann das Drehantriebselement 11 mittels einer senkrechten Verzahnung umlaufend über ein Zwischenelement verbunden sein. Auf diese Weise lässt sich das Drehmoment für die Überlast präziser bestimmen.

Ferner ist noch die Steuereinrichtung 51 der Scheibenbremsenanordnung dargestellt, welche in unten näher erläuterter Weise mit dem Belagverschleisssensor 8, dem Zustellhebelsensor 37 und der Elektromagnetspule 16 verbunden ist.

Fig. 3 zeigt ein schematisches Blockschaltbild des ersten Ausführungsbeispiels nach Fig. 1 in Form einer so genannten Stand-Alone-Version dar.

Die Anschlusseinrichtung 28 ist an der Scheibenbremse angeordnet und weist das Verbindungselement 19 in Form eines fünfpoligen Steckverbinders auf. Der Belagverschleißsensor 8 ist mit dem Verschleißsensorelement 8a, z.B. ein Hall-Sensorelement, und dem Verschleißgeberelement 8b, z.B. ein Permanentmagnet mit Nordpol N und Südpol S, gezeigt.

An der Scheibenbremse (angedeutet durch den strichpunktierten Kasten) ist die Steuereinrichtung 51, z.B. als Mikrocomputer, auf der Leiterplatte 29 in der Anschlusseinrichtung 28 angeordnet. Ebenso sind auf der Leiterplatte 29 das Belagverschleißsensorelement 8a, das Zustellsensorelement 37a und ein Kupplungsschalter 52, z.B. ein Halbleiterschalter oder ein Relais, aufgebracht und mit der Steuereinrichtung 51 verbunden. Weiterhin sind die Geberelemente 8b und 37b als Permanentmagneten mit Wirkungspfeilen schematisch angedeutet. Die Elektromagnetspule 16 der Kupplungseinrichtung 10 ist über die Leitung 17 an der Steckverbindung 31 angeschlossen. Das Verbindungselement 19 umfasst die Anschlüsse für eine 5V-Spannungsversorgung (LWS A +5V), Masse der Sensoren (LWS A GND), Signalausgang der Sensoren (LWS A) hier analog (natürlich ist auch ein digitaler Ausgang möglich), Spannungsversorgung (+UB) der Elektromagnetspule 16 (z.B. 24V) und deren Masse (GND). In diesem Ausführungsbeispiel ist ein zusätzlicher Spannungsregler 53 angeordnet, welcher eine geregelte 5V-Spannung aus der Spannungsversorgung (+UB) der Elektromagnetspule 16 zur Verfügung stellt.

Diese Ausführung kann auch zur Nachbildung eines Potentiometers ausgebildet und voll rückwärtskompatibel sein. Sie kann als Stand-Alone-Version sowie mit automatischer Erkennung eines Druckregelmoduls (DRM) und entsprechender Digitalausgabe ausgeführt sein.

In Fig. 4 ist ein schematisches Blockschaltbild des zweiten Ausführungsbeispiels nach Fig. 3 dargestellt. Im Unterschied zu Fig. 3 ist dieses keine Stand-Alone-Version. Selbstverständlich ist es aber möglich, jedes Ausführungsbeispiel mit jeder Schaltung, ob nach Fig. 3 oder Fig. 4 zu kombinieren.

In der Ausführung nach Fig. 4 wird eine so genannte integrierte Lösung dargestellt, bei welcher die Auswerteschaltung, d.h. die Steuereinrichtung 51 Bestandteil einer Steuerung 50, z.B. eines Druckregelmoduls oder/und Bremssteuergerätes, ist. Es ist daher keine Steuereinrichtung 51 auf der Leiterplatte 29 der Anschlusseinrichtung 28 erforderlich. Die Leiterplatte 29 ist mit dem Verbindungselement 19, der Steckverbindung 31, dem Belagverschleißsensorelement 8a und dem Zustellsensorelement 37a bestückt. Die Anschlussbelegung des Verbindungselementes 19 weist eine gemeinsame Masse (GND), die Spannungsversorgung +5V für die Sensorelemente 8a und 37a, die Spannungsversorgung (+UB) für die Elektromagnetspule 16 sowie die Signalausgänge LWS als Winkelsensorsignal des Belagverschleißsensors 8 und ZSH als Winkelsensorsignal des Zustellhebelsensors 37 auf.

Das Verbindungselement 19 mit einem mehradrigen Kabel mit der Steuerung 50 verbunden. Die Steuerung 50 stellt die Versorgungsspannung +5V, oder eine andere oder mehrere geeignete Spannungen, und den Masseanschluss für die Sensorelemente 8a und 37a sowie die Versorgungsspannung +UB (mit Masseanschluss GND) für die Elektromagnetspule 16 der Kupplungseinrichtung 10 bereit. Die Steuerung 50 weist die Steuereinrichtung 51, z.B. einen Mikrocomputer, zur Verarbeitung des Signals des Verschleißsensorelementes 8a und des Zustellsensorelementes 37a auf. Das Verschleißsensorelement 8a ist über den Anschluss PWM2 an der Steuereinrichtung 51 angeschlossen, und das Zustellsensorelementes 37a liegt am Anschluss PWM1 der Steuereinrichtung 51. Außerdem ist die Steuereinrichtung 51 zur Steuerung eines Kupplungsschalters 52 über einen Ausgang Dig.OUT (PWM) vorgesehen. Der Kupplungsschalter 52 dient zur Einschaltung der Elektromagnetspule 16, indem er diese mit der Versorgungsspannung +UB verbindet. Der Kupplungsschalter 52 kann z.B. ein Relais oder/und ein Halbleiterschalter sein, aus mehreren davon oder aus einer Kombination davon bestehen.

Der Belagverschleißsensor 8 erfasst einen Verschleißweg mittels beschriebener Winkelsensorik über mehrere Umdrehungen der Nachstellwelle 4. Das Verschleißsensorelement 8a gibt den erfassten Weg oder/und die erfassten Winkel als Analogsignal oder/und als digitales Signal, z.B. PWM-Signal, mit einer Auflösung von beispielsweise 12 Bit aus. Dieses Signal wird von der Steuereinrichtung 51 mittels einer Auswertesoftware derart verarbeitet, dass der Belagverschleiß der Scheibenbremse als ein elektrisches Signal oder Wert vorliegt, das/der weiter ausgewertet werden kann.

Fig. 5 und 6 zeigen schematische Diagramme zur Erfassung eines Lüftspiels einer Bremse. Dabei sind ein Druck p der Zuspannvorrichtung der Bremse und ein Belagverschleiß BV auf einer Ordinate über einem Hebelzustellweg h (Abszisse) dargestellt. Der Druck p kann auch der Luftdruck einer pneumatischen Scheibenbremse sein. Unter dem Hebelzustellweg h ist ein Weg des Bremszustellhebels 9 zu verstehen. Eine Überbrückung des Lüftspiels ist als ein Bereich 48 angegeben, der vom Nullpunkt des Hebelzustellwegs h bis zu einem Soll-Reibepunkt h_{RS} verläuft. Ab dem Soll-Reibepunkt h_{RS} zu größeren h-Werten hin schließt sich ein weiterer Bereich 49 an, der als Bremszustellung benannt ist und in welchem ein Bremsvorgang nach Überbrückung des Lüftspiels 48 stattfindet.

Eine Betätigung der Zuspannvorrichtung umfasst somit ein Zuspannen und ein Lösen. Das Zuspannen ist die Überbrückung des Lüftspiels 48 bis zum Reibepunkt 43, 43', 43" und die Bremszustellung 49. Das Lösen ist der umgekehrte Vorgang. Eine Betätigung der Zuspannvorrichtung außerhalb einer Bremsung bzw. außerhalb der Bremszustellung 49 betrifft nur den Bereich Überbrückung des Lüftspiels 48 und dabei sowohl Zuspannen als auch Lösen.

Fig. 5 zeigt den Fall, in welchem ein aktueller Reibepunkt mit einem Soll-Reibepunkt h_{RS} übereinstimmt. Im Gegensatz dazu stellt Fig. 6 den Fall dar, in welchem der aktuelle Reibepunkt mit dem Soll-Reibepunkt h_{RS} nicht übereinstimmt.

Der Belagverschleiß BV wird von dem Belagverschleißsensor 8 erfasst, und der Zustellhebelsensor 37 ermittelt den Hebelzustellweg h des Bremszustellhebels 9.

In Fig. 5 ist ein Bremsdruck 41 als durchgehende Kurve aufgezeichnet, ein Bremsdruck 41' gibt einen weiteren gestrichelten Verlauf wieder, auf den in Fig. 6 eingegangen wird. Beim Zuspannen steigt der Bremsdruck 41 im Bereich Überbrückung des Lüftspiels 48 mit einer relativ geringen Steigung vom Nullpunkt des Hebelzustellwegs h bis zu dem Soll-Reibepunkt h_{RS} an. In diesem Bereich wird das Lüftspiel überbrückt. Das Lüftspiel entspricht damit dem Hebelzustellweg vom Nullpunkt bis zum Soll-Reibepunkt h_{RS}.

In diesem Beispiel erfolgt kein Nachstellen durch die Belagverschleißnachstellvorrichtung 1. Dies ist der Fall, wenn beispielsweise die Bremsbeläge 2 neu sind oder eine Nachstellung bei einem vorherigen Bremsvorgang erfolgt ist. Somit ist der Belagverschleiß BV mit einem auf der Ordinate angegebenen Wert BV1 ein konstanter Belagverschleißsensorwert 42 des Belagverschleißsensors 8. Dieser Belagverschleiß BV1 ist bei Belagwechsel als vorher festgelegter Wert oder bei einem vorherigen Bremsvorgang mittels des Belagverschleißsensors 8 als ein elektrisches Signal erfasst worden und dann in einer Speichereinrichtung der Steuereinrichtung 51 gespeichert worden. Damit liegt der Belagverschleiß BV1 als ein temporärer Referenzwert vor.

Der Wert des Hebelzustellwegs h des Soll-Reibepunkts h_{RS} ist ebenfalls vorher entsprechend dem Typ der Bremse und der Bremsbeläge 2 festgelegt und in oder mittels der Steuereinrichtung 51 gespeichert worden.

In einem Reibepunkt 43 schneidet die Kurve des Bremsdrucks 41 eine Parallele zur Ordinate, die durch den Soll-Reibepunkt h_{RS} verläuft. Beim Erreichen des Reibepunkts 43 steigt der Bremsdruck 41 im Bereich Bremszustellung 49 stark an, da die Bremsbeläge 2 nun an der Bremsscheibe anliegen und eine Bremsung stattfindet.

In Fig. 6 ist gezeigt, dass das Lüftspiel aufgrund von Verschleiß der Bremsbeläge 2 durch vorangegangene Bremsvorgänge größer geworden ist. D.h., ein aktueller Reibepunkt hat sich zu einem größeren Wert des Hebelzustellwegs h verschoben. Dieser aktuelle Reibepunkt ist hier als Ist-Reibepunkt h_{RI} angegeben und fällt nicht mehr mit dem Soll-Reibepunkt h_{RS} zusammen.

Die gestrichelt gezeichnete Kurve des Bremsdrucks 41' stellt einen Verlauf dar, der sich nach einigen Bremsvorgängen mit dabei auftretendem Verschleiß von Bremsbelägen 2 ergibt. Der Bremsdruck 41' steigt in Fig. 6 mit einer wenig geringeren Steigung als in Fig. 5 im Bereich Überbrückung des Lüftspiels 48 an und verläuft bis zu einem aktuellen Reibepunkt 43', in welchem die Kurve des Bremsdrucks 41' die durch den Wert mit der Bezeichnung Ist-Reibepunkt h_{RI} verlaufende Parallel zur Ordinate schneidet. Der Kurvenverlauf, welcher sich ohne vorherige Nachstellung ergibt, ist durch den längeren Weg h, d.h. durch die Differenz
Ist-Reibepunkt h_{RI} - Soll-Reibepunkt h_{RS}.
bestimmt.
Diesem aktuellen Ist-Reibepunkt h_{RI} ist ein Belagverschleiß BV2 zugeordnet (Schnittpunkt 44). Die Differenz
Belagverschleiß BV2 - Belagverschleiß BV1
wird als Verschleißmaß bezeichnet.

Um dieses Verschleißmaß durch Nachstellen auszugleichen, d.h. das Lüftspiel wieder auf den ursprünglichen Wert (in einem festlegbaren Toleranzbereich) einzustellen, und somit den Verlauf der Kurve des Bremsdrucks 41 gemäß Fig. 5 zu erhalten, wird nun mittels der Belagverschleißnachstellvorrichtung 1 mit dem Belagverschleißsensor 8 und einer Sensierung des Bremszustellhebels 9, z.B. mit dem Zustellhebelsensor 37, zuerst festgestellt, ob der Ist-Reibepunkt h_{RI} dem Soll-Reibepunkt h_{RS} (mit einer gewissen vorher festlegbaren Toleranz) entspricht oder durch Verschleiß zu höheren Hebelzustellwegen h verschoben ist.

Dabei wird die Kupplungseinrichtung 10 bei jedem oder nach einer vorher festlegbaren Anzahl von Bremsvorgängen aktiviert. Das Aktivieren beginnt nach Überbrückung des Lüftspiels, z.B. wenn der durch den Zustellhebelsensor 37 erfasste Wert des Hebelzustellwegs h den h-Wert des Soll-Reibepunkt h_{RS} erreicht hat oder kurz vorher. Dies wird unten noch weiter erläutert. Es ist selbstverständlich möglich, diesen Beginn in einem Steuerprogramm in der Steuereinrichtung vorher fest einzustellen oder auch mittels geeigneter Algorithmen, z.B. aus einer Historie vorheriger Bremsvorgänge zu berechnen. Zum Nachstellen des Belagverschleißes können auch Mittelwertabweichungen von vorher festgelegten Sollwerten (h, BV) herangezogen werden.

Da sich der Ist-Reibepunkt h_{RI} durch den Verschleiß bei den vorherigen Bremsvorgängen vom Soll-Reibepunkt h_{RS} nach höheren h-Werten verschoben hat, wird der vom Belagverschleißsensor 8 erfasste Belagverschleiß BV von dem zuvor gespeicherten Belagverschleiß BV1 so lange ansteigen, bis dass der aktuelle Ist- Reibepunkt h_{RI} mit dem zugeordneten Belagverschleiß BV2 erreicht ist. In dem Ist- Reibepunkt h_{RI} kann keine Belagverschleißnachstellung mehr erfolgen, d.h. der vom Belagverschleißsensor 8 erfasste Belagverschleiß BV2 ändert sich nicht mehr. Eine Beendigung der Aktivierung der Kupplungseinrichtung 10 erfolgt danach, wie unten noch erläutert wird.

Eine Verschiebung des aktuellen Ist- Reibepunkts h_{RI} kann außerdem mithilfe des Zustellhebelsensors 37 ermittelt werden. Dazu wird der jeweils durch den Zustellhebelsensor 37 erfasste Wert des Hebelzustellwegs h mit dem gespeicherten h-Wert des Soll-Reibepunkt h_{RS} verglichen. Überschreitet der erfasste Wert des Hebelzustellwegs h den h-Wert des Soll-Reibepunkt h_{RS}, so hat sich der Reibepunkt verschoben.

Die Aktivierung der Kupplungseinrichtung 10 erfolgt wie in Fig. 6 illustriert in einem Elektromagnetkupplungsbetrieb 45, welcher mit einem Rechteck mit einer nach rechts oben verlaufenden Schraffur als Lüftspielverkleinerungsbetrieb 45a veranschaulicht ist. D.h., der bei der Bremszustellung 49 (oder auch schon z.T. vorher bei der Überbrückung des Lüftspiels 48) von dem Bremszustellhebel 9 zurückgelegte Hebelzustellweg h wird ausgenutzt, um die Verschleißnachstellung durchzuführen. Der Elektromagnetkupplungsbetrieb 45 als Lüftspielverkleinerungsbetrieb 45a wird im Soll-Reibepunkt h_{RS} oder kurz vorher aktiviert. Dabei schaltet die Steuereinrichtung 51 (siehe Fig. 3, 4) den Kupplungsschalter 52 ein, wodurch die Elektromagnetspule 16 zur Aktivierung der Kupplungseinrichtung 10 bestromt wird. Dabei wird die Bewegung des Bremszustellhebels 9 auf die Nachstellwelle 4 der Beschlagverschleißnachstellvorrichtung 1 durch die Kupplungseinrichtung 10 übertragen. Sobald der Ist-Reibepunkt h_{RI} erreicht ist, ist die Nachstellung beendet. Das Verschleißmaß, bzw. der Belagverschleiß BV2 ist erreicht. Die Aktivierung der Kupplungseinrichtung 10 kann, z.B. mit einem bestimmten Übermaß h oder einer Zeitverzögerung, weiterbestehen, denn die Verzahnung des Kupplungsabschnitts 14 gerät bei Blockierung außer Eingriff. Mit anderen Worten, sobald der aktuelle Reibepunkt 43' erreicht ist, ist eine Nachstellung nicht mehr möglich und die Belagverschleißnachstellvorrichtung 2 blockiert. Dabei kann der Kupplungsabschnitt 14 außer Eingriff kommen oder/und eine oder mehrere andere Überlasteinrichtungen ansprechen. Alternativ kann bei oder vor der Rückbewegung des Bremszustellhebels 9 der Elektromagnetkupplungsbetrieb 45 wieder ausgeschaltet werden. Die Bewegung des Bremszustellhebels 9 ist über den Zustellhebelsensor 37 vollständig erfassbar.

Es ist aber auch möglich, dass bei gleichzeitiger Überwachung des Beschlagverschleißsensors 8 und Erfassung des Hebelzustellwegs h durch den Zustellhebelsensor der aktuelle Reibepunkt über den Kraftschluss der Nachstellspindel 4 erkannt werden kann. Dies erfolgt z.B. dadurch, dass bei sensierter Zustellbewegung des Bremszustellhebels 9 keine Verstellung mehr mittels des Belagverschleißsensors 8 erfasst wird, was im Schnittpunkt 44 (Fig. 6) der Fall ist.

Auf diese Weise kann der aktuelle Reibepunkt auch zu jeder Zeit ermittelt werden. Dazu ist eine Überbrückung des Lüftspiels 48 notwendig, jedoch keine Bremszustellung 49.

Außerdem ist es möglich, dass bei erfasster Überschreitung des Soll-Reibepunkt h_{RS} durch den Zustellhebelsensor 37 bei der nächsten Bremszuspannung, d.h. Zustellbewegung des Bremszustellhebels 9, die Elektromagnetspule 16 mittels des Kupplungsschalters 52 durch die Steuereinrichtung 51 eingeschaltet und bei der Rückbewegung des Bremszustellhebels 9 wieder ausgeschaltet wird. Dazu erhält oder/und überwacht die Steuereinrichtung 51 ein Einschalt- und Ausschaltsignal z.B. von dem Bremssteuergerät.

Diese Nachstellung beim nächsten folgenden Bremsvorgang erfolgt durch Bestromen der Elektromagnetspule 16 der Kupplungseinrichtung 10 kurz vor Beginn einer Bremszustellung 49 durch den Bremszustellhebel 9 kurz vor dem Soll-Reibepunkt h_{RS}. Natürlich ist es auch jederzeit möglich, während des zeitlichen Verlaufs der Zuspannung, also in den Bereichen 48 und 49, die Kupplungseinrichtung 10 ein- und auszuschalten.

Auf diese Weise ist es möglich, durch kurze Bestromung der Elektromagnetkupplung 16 der Kupplungseinrichtung 10 auf nur einem kurzen Abschnitt des Hebelzustellwegs h eine effektive Belagverschleißnachstellung zu erreichen. Das zur Betätigung der Belagverschleißnachstellvorrichtung 1 benötigte Drehmoment, welches von der Bremszustellenergie am Bremszustellhebel 9 entnommen wird, ist dadurch auf einen Zeitabschnitt des kurzen Zeitraums des Elektromagnetkupplungsbetriebs 45 bis zum Außereingriffkommen des Kupplungsabschnitts 14 begrenzt, was eine Energieeinsparung zur Folge hat.

Fig. 7 zeigt ein schematisches Diagramm zur Vergrößerung des Lüftspiels, wobei ein Druck p der Zuspannvorrichtung der Bremse und ein Belagverschleiß BV auf einer Ordinate - im Gegensatz zu Fig. 5 und 6 - über einer Zeit t (Abszisse) aufgetragen sind.

Zum Zeitpunkt t=0 ist die Bremse noch zugespannt, der Bremsdruck 41 weist einen hohen Wert auf. Der Belagverschleißwert BV2 ist als Belagverschleißsensorwert 42 erfasst.

Beim Lösen der Bremse bewegt sich der Bremszustellhebel 9 zurück und der Bremsdruck 41 fällt über der Zeit t ab, bis der Reibepunkt (zu erkennen am Knick der Kurve von einer hohen Steigung in eine geringere Steigung) erreicht wird.

In dem hier dargestellten Fall liegt der Bremsbelag 2 ohne Zuspannung an der Bremsscheibe an und schleift. Dies kann z.B. durch Temperatursensoren an geeigneter Stelle in der Nähe des Bremsbelags 2 bzw. dessen Trägers erfasst werden.

Es ist nun möglich, die Belagverschleißnachstellvorrichtung 1 durch Bestromung der Elektromagnetspule 16 der Kupplungseinrichtung 10 bei der Rückbewegung bzw. Rückstell- oder Lösebewegung des Bremszustellhebels 9 zurückzustellen, z.B. auf den Belagverschleißwert BV1. Dies erfolgt hier kurz vor Ende der Rückbewegung des Bremszustellhebels 9 in einem weiteren Elektromagnetkupplungsbetrieb 45 als Lüftspielvergrößerungsbetrieb 45b (dargestellt mit einer nach links oben verlaufenden Schraffur), der zu einem Zeitpunkt t1 beginnt und in einem Zeitpunkt t2 endet. Im Zeitpunkt t1 wird die Nachstellwelle 4 der Belagverschleißnachstellvorrichtung 1 zurückgedreht, wobei der Belagverschleißsensor 8 die Änderung von BV2 zu niedrigeren Werten erfasst. Wird der Belagverschleiß BV1 erreicht, so wird in dem zugehörigen Zeitpunkt t2 der Elektromagnetkupplungsbetrieb 45 wieder beendet.

So ist es außerdem möglich, durch Aktivierung der Elektromagnetkupplung 16 der Kupplungseinrichtung 10 auf Abschnitten des Hebelzustellwegs h beim Zuspannen und Lösen der Bremse eine Regelung des Lüftspiels durch Nachstellen und Rückstellen zu erreichen.

Die Erkennung eines zu kleinen Lüftspiels bzw. eines schleifenden Bremsbelags 2 wird hier nicht näher erläutert und kann auf vielfältige Weise erfolgen, wobei die Einstellung des Lüftspiels durch die obigen Vorgänge ermöglicht ist.

Das Rückstellen wie in Fig. 7 gezeigt, kann selbstverständlich auch zu einem anderen Zeitpunkt t im Laufe des Hebelzustellwegs h (siehe Fig. 5, 6) erfolgen.

Die in Fig. 5 - 7 dargestellten und erläuterten Vorgänge können insbesondere mit dem in Fig. 3 gezeigten schematischen Blockschaltbild des ersten Ausführungsbeispiels nach Fig. 1 in Form der so genannten Stand-Alone-Version erfolgen.

Im Zusammenhang mit dem zweiten Ausführungsbeispiel nach dem schematischen Blockschaltbild nach Fig. 4, insbesondere in einer so genannten integrierten Version, zusammen mit einem aktiven Druckregelmodul, z.B. Steuerung 50, kann der Reibepunkt durch Messung des Bremsdrucks und der Bewegung des Bremszustellhebels 9 bei Erreichen eines Solldrucks ermittelt werden. Dabei kann eine Auswertung der eventuellen Wegverschiebung von einem gemessenen Kennlinienwert bezogen auf eine gespeicherte Sollkennlinie erfolgen.

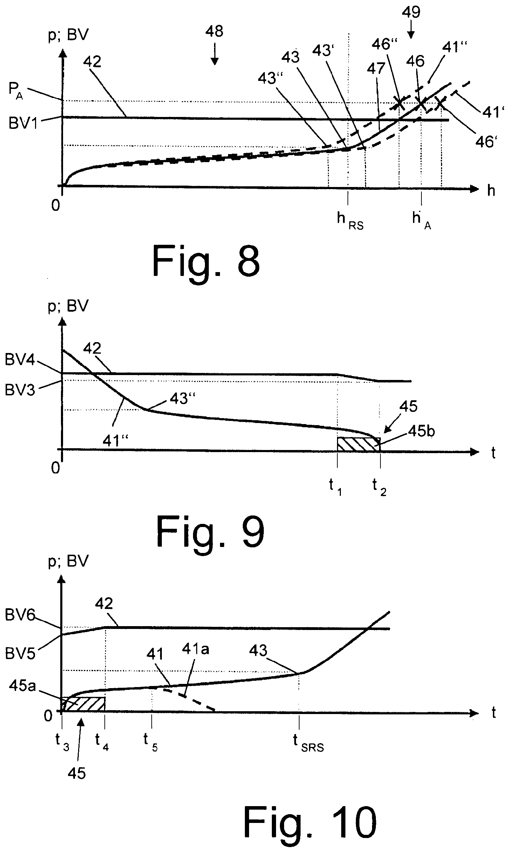

In Fig. 8 ist der Druck p der Zuspannvorrichtung der Bremse und der Belagverschleiß BV auf der Ordinate über dem Hebelzustellweg h (Abszisse) dargestellt.

Der Bremsdruck ist als eine durchgehende Sollkennlinie 47 (ähnlich Fig. 5, 6) zwischen zwei gestrichelt gezeichneten Kurven Bremsdruck 41' und 41" angegeben. Dabei verläuft die Sollkennlinie 47 durch den Reibepunkt 43, welcher dem Hebelzustellweg Soll-Reibepunkt h_{RS} zugeordnet ist. Die Bremsdruckkurven 41' und 41" verlaufen jeweils durch einen zu ihnen gehörenden Reibepunkt 43' und 43" links und rechts von dem Reibepunkt 43, wobei dieser Reibepunkt 43 einen Mittelwert der beiden anderen Reibepunkte 43' und 43" bildet.

Durch eine Druckmessung an einem eingeregelten Bremspunkt 46, 46', 46" ist eine präzisen und permanenten Reibepunktüberwachung möglich. Der Bremspunkt 46 ist ein Schnittpunkt einer Geraden, die einem Abgleichdruck P_{A}, z.B. mit einem Wert von 1,5 bar, entspricht, mit der Sollkennlinie 47. Eine Parallele zur Ordinate durch den Bremspunkt 46 entspricht auf der Abszisse einem Abgleichwegpunkt h_{A}, wobei der Bremspunkt 46 einen Mittelwert der beiden anderen Bremspunkte 46' und 46" bildet. Die anderen Bremspunkte 46' und 46" sind jeweils Schnittpunkte des Abgleichdrucks P_{A} mit einer der Kurven Bremsdruck 41' und 41".

Die Sollkennlinie 47 ist eine gespeicherte Druck/Wegkennlinie, anhand derer mittels Vergleich die Reibepunktüberwachung in der Steuerung erfolgt. Dazu werden der durch den Zustellhebelsensor 37ständig vorhandene erfasste Wert des Hebelzustellwegs h und der durch einen nicht gezeigten Drucksensor gemessene Druck p verwendet. Der Druck p wird im statischen Zustand im Bereich Bremszustellung 49 gemessen. Eine Erkennung des Reibepunktes 43, 43', 43" kann durch eine Auswertung des statischen Bremsdrucks p über dem Hebelzustellweg h (in Abhängigkeit einer Bewegung des Bremszustellhebels 9) erfolgen, beispielsweise durch Kennlinienvergleich Soll/Ist.

Wenn z.B. der Bremspunkt 46' ermittelt wird, ist es auf diese Weise möglich zu erkennen, dass der zugehörige Reibepunkt 43' von dem Sollwert des Reibepunkts 43 zu höheren h-Werten hin verschoben ist, was die Kurve Bremsdruck 41' zeigt. So ist ein Belagverschleiß erfasst, welcher nachzustellen ist, wie unten im Zusammenhang mit Fig. 10 erläutert wird.

Ein ermittelter Bremspunkt 46" mit der zugehörigen Kurve Bremsdruck 41" zeigt beispielsweise an, dass der Reibepunkt 43" von dem Sollwert des Reibepunkts 43 zu kleineren h-Werten hin verschoben ist. Damit kann eine Rückstellung der Bremsbeläge 2 erfolgen, um das Lüftspiel zu korrigieren und ein Schleifen der Bremsbeläge 2 zu verhindern. Zur Erläuterung dazu dient Fig. 9.

Fig. 9 zeigt ein weiteres schematisches Diagramm zur Vergrößerung des Lüftspiels, wobei ein Druck p der Zuspannvorrichtung der Bremse und ein Belagverschleiß BV auf einer Ordinate - im Gegensatz zu Fig. 8 - über einer Zeit t (Abszisse) aufgetragen sind.

Der Belagverschleißsensorwert 42 entspricht einem Belagverschleiß BV4, bei welchem der Reibepunkt 43" (siehe Fig. 8) erfasst wurde und eine Rückstellung notwendig ist. Beim Lösen einer zugespannten Bremse wird zu einem Zeitpunkt t₁ gegen Ende der Kurve Bremsdruck 41" der Elektromagnetkupplungsbetrieb 45 als Lüftspielvergrößerungsbetrieb 45b aktiviert, wobei die Belagverschleißnachstellvorrichtung 1 wie oben beschrieben die Beläge 2 zurückstellt, bis der Elektromagnetkupplungsbetrieb 45 in einem Zeitpunkt t₂ endet. Im Zeitpunkt t₂ ist ein Belagverschleißsensorwert 42 erreicht, der einem Belagverschleiß BV3 entspricht. Das Lüftspiel ist somit wieder vergrößert worden, die Beläge 2 schleifen nicht mehr.

Fig. 10 zeigt ein weiteres schematisches Diagramm zur Verkleinerung des Lüftspiels, wobei der Druck p und der Belagverschleiß BV auf der Ordinate - im Gegensatz zu Fig. 8 - über der Zeit t (Abszisse) wie in Fig. 9 aufgetragen sind.

Wie oben im Zusammenhang mit Fig. 8 beschrieben, wird nach Erfassung des Reibepunkts 43' und eines zugehörigen Belagverschleißes BV5 festgestellt, dass eine Nachstellung der Bremsbeläge 2 erforderlich ist. Bei einer folgenden Zuspannung, die in Fig. 10 dargestellt ist, wird zu Beginn der Kurve Bremsdruck 41 der Elektromagnetkupplungsbetrieb 45 als Lüftspielverkleinerungsbetrieb 45a in einem Zeitpunkt t₃ aktiviert, wobei die Belagverschleißnachstellvorrichtung 1 eine Nachstellung bzw. Zustellung der Beläge zur Verkleinerung des Lüftspiels wie oben beschrieben vornimmt, bis ein entsprechender Belagverschleiß BV6 erreicht ist. Der Lüftspielverkleinerungsbetrieb 45a endet dabei in einem Zeitpunkt t₄. Auf diese Weise entspricht die Kurve des Bremsdrucks 41 wieder der Sollkennlinie 47 (Fig. 8) mit dem Reibepunkt 43, welcher dem Soll-Reibepunkt entspricht, dem eine Zeit Soll-Reibepunkt t_{RS} zugeordnet ist.

Der Elektromagnetkupplungsbetrieb 45 zum Nachstellen oder Rückstellen der Bremsbeläge 2 kann wahlweise zu Beginn der Bremszustellung 49 nach Überbrückung des Lüftspiels, z.B. kurz vor Erreichen des Reibepunkts (Fig. 6), nach der Bremszustellung 49 am Ende des Lösens der Zuspannvorrichtung (t₁ ... t₂ in Fig. 7 und 9), oder aber auch außerhalb der Bremszustellung 49 erfolgen. Dabei bedeutet der Ausdruck "außerhalb der Bremszustellung 49 bzw. außerhalb einer Bremsung", dass die Zuspannvorrichtung nur in dem Bereich der Überbrückung des Lüftspiels 48 betätigt wird, ohne einen Reibepunkt 43, 43', 43" vollständig zu erreichen.

Der Elektromagnetkupplungsbetrieb 45 außerhalb einer Bremsung bzw. Bremszustellung wird nun anhand Fig. 10 erläutert. Dazu ist in Fig. 10 ein Kurvenverlauf Bremsdruck 41 a gestrichelt dargestellt. Zu Beginn der Zuspannung im Zeitpunkt t₃ wird der Elektromagnetkupplungsbetrieb 45 (entweder als Lüftspielverkleinerungsbetrieb 45a oder als - dargestellt ist der Lüftspielverkleinerungsbetrieb 45a, der Lüftspielvergrößerungsbetrieb 45b ist aber leicht vorstellbar) im Anfangsbereich der Kurve Bremsdruck 41 (durchgezogene Kurve 41) aktiviert und im Zeitpunkt t₄ wieder durch Ausschalten der Bestromung der Elektromagnetspule 16 der Kupplungseinrichtung 10 beendet. Dann wird in einem darauf folgenden Zeitpunkt t₅ die Zuspannung wieder beendet, wobei der Bremsdruck 41 a dem gestrichelten Kurvenverlauf folgt und wieder zu Null wird. Bei diesem Vorgang erfolgt jedoch keine Bremsung bzw. Bremszustellung. Durch die Zuspannung nur innerhalb des Lüftspiels wird der Bremszustellhebel 9 verstellt, welcher dabei die Belagverschleißnachstellvorrichtung 1 während des Elektromagnetkupplungsbetriebs 45 betätigt. Da aber die Zuspannung aufgrund des Kurvenverlaufs Bremsdruck 41 a wieder beendet wird, wird der Bremszustellhebel 9 auch zurückgestellt. Der Reibepunkt 43 wird hierbei nicht erreicht, es erfolgt also kein Anlegen der Bremsbeläge 2 an die Bremsscheibe und somit auch kein Bremsvorgang.

Das Beenden der Zuspannung im Zeitpunkt t₅ kann nach Ausschalten der Bestromung der Elektromagnetspule 16 der Kupplungseinrichtung 10 nach einer vorher einstellbaren Verzögerungszeit im Zeitpunkt t₅ erfolgen. Mittels des erfassten Hebelzustellwegs h durch den Zustellhebelsensor 37 zusammen mit dem durch den Belagverschleißsensor 8 erfassten Belagverschleißwert 42 kann ebenfalls die Zuspannung beendet werden.

Somit kann das Lüftspiel bzw. der Belagverschleiß bei Abweichung des Mittelwertes des Reibepunkts 43 bzw. des Bremspunkts 46 von der Sollkennlinie 47 durch den Elektromagnetkupplungsbetrieb 45, d.h. auch durch einzelne kurze Einschaltpulse der Elektromagnetspule 16 der Kupplungseinrichtung 10 geregelt werden.

Das Bestromen der Elektromagnetkupplung 16 kann z.B. mittels zumindest eines Schaltimpulses erfolgen, wobei dieses außerhalb einer Bremsung erfolgen kann.

Mittels der Reibepunktüberwachung über den Bremspunkt 46, 46', 46" ist es auch möglich, eine verbesserte Sicherheit einer Druckregelung durch schnellere Fehlererkennung, z.B. bei einem fehlerhaften Drucksensor, zu erreichen.

Die Erfindung ist nicht auf die oben beschriebenen Ausführungsbeispiele beschränkt. Sie ist im Rahmen der beigefügten Ansprüche modifizierbar.

So ist es denkbar, dass eine Sensierung der Schwenkbewegung des Bremszustellhebels 9 auf andere als oben beschrieben Weise erfolgen kann.

Die Elektromagnetspule 16 kann auch zwei oder mehr Spulen aufweisen.

### Bezugszeichenliste

- 1: Belagverschleißnachstellvorrichtung
- 2: Bremsbelag
- 3: Nachstellspindel
- 4: Nachstellwelle
- 5: Abtriebsrad
- 5a: Zuspannfeder
- 6: Übertragungsende
- 7: Übertragungsrad
- 8: Belagverschleisssensor
- 8a: Verschleißsensorelement
- 8b: Verschleißgeberelement
- 9: Bremszustellhebel
- 10: Kupplungseinrichtung
- 11: Drehantriebselement
- 12: Zahneingriff
- 13: Kupplungsdeckel
- 13a: Kupplungsbereich
- 13b: Verbindungsabschnitt
- 13c: Wandabschnitt
- 14: Kupplungsabschnitt
- 15: Kupplungsspalt
- 16: Elektromagnetspule
- 17: Leitung
- 18: Verbindungsleitung
- 19, 19a: Verbindungselement
- 20, 21: Axialanschlag
- 22: Anschlagbegrenzungselement
- 23: Reibabschnitt
- 24: Bremsengehäuse
- 25: Kette
- 26: Außenlager
- 27: Spulenträger
- 27a: Scheibenabschnitt
- 28: Anschlusseinrichtung
- 29: Leiterplatte
- 30: Gehäuse
- 31: Steckverbindung
- 32: Druckscheibe
- 33: Kupplungselement
- 34: Rückstellfeder
- 35: Abdeckung
- 36: Zuspannfeder
- 37: Zustellhebelsensor
- 37a: Zustellsensorelement
- 37b: Zustellgeberelement
- 38: Trägerwelle
- 38a: Trägerabschnitt
- 38b: Trägerverzahnung
- 39: Lager
- 40: Zahnsegment
- 40a: Zahnsegmenthalter
- 41, 41', 41 ", 41a: Bremsdruck
- 42: Belagverschleißsensorwert
- 43, 43', 43": Reibepunkt
- 44: Schnittpunkt
- 45: Elektromagnetkupplungsbetrieb
- 45a: Lüftspielverkleinerungsbetrieb
- 45b: Lüftspielvergrößerungsbetrieb
- 46: Bremspunkt
- 47: Sollkennlinie
- 48: Überbrückung Lüftspiel
- 49: Bremszustellung
- 50: Steuerung
- 51: Steuereinrichtung
- 52: Kupplungsschalter
- 53: Spannungsregler
- BV, BV1...6: Belagverschleiß
- h: Hebelzustellweg
- h_{A}: Abgleichwegpunkt
- h_{RS}: Hebelzustellweg Soll-Reibepunkt
- h_{RI}: Hebelzustellweg Ist-Reibepunkt
- N, S: Permanentmagnetpole
- p, P_{A}: Druck
- t, t1...t2: Zeit
- t_{RS}: Zeit Soll-Reibepunkt

## Patentansprüche

1. Verfahren zum Steuern einer elektrischen Belagverschleißnachstellvorrichtung (1) einer Scheibenbremsenanordnung, insbesondere für ein Kraftfahrzeug, und einer Steuereinrichtung (51), wobei die Scheibenbremse eine Zuspannvorrichtung mit einem Bremszustellhebel (9) aufweist, wobei die Belagverschleißnachstellvorrichtung (1) mit dem Bremszustellhebel (9) gekoppelt und vorzugsweise in eine Nachstellspindel (3) der Scheibenbremse eingesetzt ist, **gekennzeichnet durch** die Verfahrensschritte
(S1) Erfassen eines Lüftspiels der Scheibenbremse;
(S2) Erkennen einer Veränderung des Lüftspiels **durch** Vergleich mit vorher festgelegten Werten; und
(S3) Steuern der elektrischen Belagverschleißnachstellvorrichtung (1) durch Bestromen einer Elektromagnetspule (16) einer Kupplungseinrichtung (10) der elektrischen Belagverschleißnachstellvorrichtung (1) bei einer Bewegung des Bremszustellhebels (9).

2. Verfahren nach Anspruch 1, **dadurch gekennzeichnet, dass** beim Erfassen des Lüftspiels der Scheibenbremse ein Hebelzustellweg (h) des Bremszustellhebels (9) erfasst wird.

3. Verfahren nach Anspruch 2, **dadurch gekennzeichnet, dass** beim Erfassen des Lüftspiels der Scheibenbremse ein Reibepunkt über den Kraftschluss einer Nachstellspindel (4) der elektrischen Belagverschleißnachstellvorrichtung (1) ermittelt wird, indem der Hebelzustellweg (h) des Bremszustellhebels (9) und eine Verstellbewegung der Belagverschleißnachstellvorrichtung (1) bei Bestromen der Elektromagnetspule (16) erfasst werden.

4. Verfahren nach einem der vorhergehenden Ansprüche, **dadurch gekennzeichnet, dass** beim Erfassen des Lüftspiels der Scheibenbremse eine Druckmessung bei einem vorher festgelegten Bremspunkt (46, 46', 46") im Vergleich mit einer vorher festgelegten Sollkennlinie (47) erfolgt.

5. Verfahren nach Anspruch 4, **dadurch gekennzeichnet, dass** eine Erkennung eines Reibepunktes (43, 43', 43") durch Auswerten eines gemessenen statischen Bremsdrucks (p) in Abhängigkeit einer Bewegung des Bremszustellhebels (9) erfolgen.

6. Verfahren nach einem der vorhergehenden Ansprüche, **dadurch gekennzeichnet, dass** das Steuern der elektrischen Belagverschleißnachstellvorrichtung (1) durch Bestromen der Elektromagnetspule (16) bei einer Zuspannbewegung des Bremszustellhebels (9) zum Nachstellen der elektrischen Belagverschleißnachstellvorrichtung (1) erfolgt, wenn eine Veränderung des Lüftspiels als Vergrößerung des Lüftspiels erkannt wurde.

7. Verfahren nach einem der vorhergehenden Ansprüche, **dadurch gekennzeichnet, dass** das Steuern der elektrischen Belagverschleißnachstellvorrichtung (1) durch Bestromen der Elektromagnetspule (16) bei einer Lösebewegung des Bremszustellhebels (9) zum Rückstellen der elektrischen Belagverschleißnachstellvorrichtung (1) erfolgt, wenn eine Veränderung des Lüftspiels als Verkleinerung des Lüftspiels erkannt wurde.

8. Verfahren nach Anspruch 5 oder 6, **dadurch gekennzeichnet, dass** das Steuern der elektrischen Belagverschleißnachstellvorrichtung (1) durch Bestromen der Elektromagnetspule (16) beim Zuspannen der Zuspannvorrichtung kurz vor einer Bremszustellung (49) nach Überbrückung des Lüftspiels, zu Beginn einer Bremszustellung (49) nach Überbrückung des Lüftspiels, beim Lösen der Zuspannvorrichtung nach der Bremszustellung (49) am Ende des Lösens der Zuspannvorrichtung, oder außerhalb der Bremszustellung (49) erfolgen.

9. Verfahren nach einem der vorhergehenden Ansprüche, **dadurch gekennzeichnet, dass** das Bestromen der Elektromagnetspule (16) mittels zumindest eines kurzen Schaltimpulses erfolgt.

10. Verfahren nach einem der vorhergehenden Ansprüche, **dadurch gekennzeichnet, dass** das Bestromen der Elektromagnetspule (16) mittels PWM erfolgt.

11. Verfahren nach einem der vorhergehenden Ansprüche, **dadurch gekennzeichnet, dass** mittels des Bestromens der Elektromagnetspule (16) eine einstellbare Überlastkupplung gebildet wird.

12. Scheibenbremsenanordnung, aufweisend eine Scheibenbremse, insbesondere für ein Kraftfahrzeug, mit einer Zuspannvorrichtung mit einem Bremszustellhebel (9), eine elektrische Belagverschleißnachstellvorrichtung (1), die vorzugsweise in eine Nachstellspindel (3) der Scheibenbremse einsetzbar ist, und eine Steuereinrichtung (51) zur Durchführung des Verfahrens nach einem der vorhergehenden Ansprüche, wobei die elektrische Belagverschleißnachstellvorrichtung (1) mit dem Bremszustellhebel (9) gekoppelt ist und Folgendes aufweist:
a) eine Nachstellwelle (4) mit einem Außenlager (26);
b) ein Drehantriebselement (11); und
c) eine Kupplungseinrichtung (10) zum schaltbaren Kuppeln des Drehantriebselement (11) mit der Nachstellwelle (4),
**dadurch gekennzeichnet, dass**
d) die Kupplungseinrichtung (10) elektrisch schaltbar mit mindestens einer Elektromagnetspule (16) ausgebildet ist.

13. Scheibenbremsenanordnung nach Anspruch 12, **dadurch gekennzeichnet, dass** die elektrische Belagverschleißnachstellvorrichtung (1) mindestens einen Belagverschleißsensor (8) aufweist.

14. Scheibenbremsenanordnung nach einem Anspruch 12 oder 13, **dadurch gekennzeichnet, dass** die elektrische Belagverschleißnachstellvorrichtung (1) mindestens einen Zustellhebelsensor (37) aufweist.

15. Scheibenbremsenanordnung nach einem der Ansprüche 12 bis 14, **dadurch gekennzeichnet, dass** die Steuereinrichtung (51) an der elektrischen Belagverschleißnachstellvorrichtung (1) angeordnet ist.

16. Scheibenbremsenanordnung nach einem der Ansprüche 12 bis 14, **dadurch gekennzeichnet, dass** die Steuereinrichtung (51) Bestandteil einer Steuerung (50), z.B. eines Druckregelmoduls oder/und Bremssteuergerätes, ist.

17. Scheibenbremse, insbesondere für ein Kraftfahrzeug, mit einer Zuspannvorrichtung mit einem Bremszustellhebel (9) und mindestens einer Nachstellspindel (3), **gekennzeichnet durch** mindestens eine elektrische Belagverschleißnachstellvorrichtung (1) der Scheibenbremsenanordnung nach einem der Ansprüche 12 bis 16.

## Claims

1. Method for controlling an electric pad wear readjustment device (1) of a disc brake assembly, in particular for a motor vehicle, and a control device (51), wherein the disc brake has an application device with a brake feed lever (9), wherein the pad wear readjustment device (1) is coupled to the brake feed lever (9) and is preferably inserted into a readjustment spindle (3) of the disc brake, **characterised by** the following method steps:
(S1) detecting a clearance of the disc brake;
(S2) identifying a change in the clearance by comparison with preset values; and
(S3) controlling the electric pad wear readjustment device (1) by energising a solenoid coil (16) of a clutch device (10) of the electric pad wear readjustment device (1) during a movement of the brake feed lever (9).

2. Method according to claim 1, **characterised in that**, during the detection of the clearance of the disc brake, a lever feed travel (h) of the brake feed lever (9) is detected.

3. Method according to claim 2, **characterised in that**, during the detection of the clearance of the disc brake, a friction point is determined on the basis of the non-positive engagement by a readjustment spindle (4) of the electric pad wear readjustment device (1), by virtue of the lever feed travel (h) of the brake feed lever (9) and an adjustment movement of the pad wear readjustment device (1) in the event of energisation of the electromagnetic coil (16) being detected.

4. Method according to any of the preceding claims, **characterised in that**, during the detection of the clearance of the disc brake, a pressure measurement is performed at a preset braking point (46, 46', 46") in comparison with a preset target characteristic curve (47).

5. Method according to claim 4, **characterised in that** an identification of a friction point (43, 43', 43") is performed by evaluation of a measured static brake pressure (p) as a function a movement of the brake feed lever (9).

6. Method according to any of the preceding claims, **characterised in that** the control of the electric pad wear readjustment device (1) by energisation of the solenoid coil (16) during a brake application movement of the brake feed lever (9) for the purpose of readjustment of the electric pad wear readjustment device (1) is performed if a change in the clearance in the sense of an increase of the clearance has been identified.

7. Method according to any of the preceding claims, **characterised in that** the control of the electric pad wear readjustment device (1) by energisation of the solenoid coil (16) during a release movement of the brake feed lever (9) for the purpose of retraction of the electric pad wear readjustment device (1) is performed if a change in the air clearance in the sense of a reduction of the air clearance has been identified.

8. Method according to claim 5 or 6, **characterised in that** the control of the electric pad wear readjustment device (1) by energisation of the solenoid coil (16) during the brake-application movement of the application device is performed shortly before a brake feed movement (49) after the clearance has been bridged, at the start of a brake feed movement (49) after the clearance has been bridged, upon the release of the application device after the brake feed movement (49) at the end of the release of the application device, or outside the brake feed movement (49).

9. Method according to any of the preceding claims, **characterised in that** the energisation of the solenoid coil (16) is performed by way of at least one short switching pulse.

10. Method according to any of the preceding claims, **characterised in that** the energisation of the solenoid coil (16) is performed by way of PWM.

11. Method according to any of the preceding claims, **characterised in that** an adjustable overload clutch is formed by means of the energisation of the solenoid coil (16).

12. Disc brake assembly, comprising a disc brake, in particular for a motor vehicle, with an application device with a brake feed lever (9), an electric pad wear readjustment device (1) which is preferably insertable into a readjustment spindle (3) of the disc brake (3), and a control device (51) for carrying out the method as of the preceding claims, wherein the electric pad wear readjustment device (1) is coupled to the brake feed lever (9) and has the following:
a) a readjustment shaft (4) with an outer bearing (26);
b) a rotary drive element (11); and
c) a clutch device (10) for the switchable coupling of the rotary drive element (11) to the readjustment shaft (4),
**characterised in that**
d) the clutch device (10) is of an electrically switchable design with at least one solenoid coil (16).

13. Disc brake assembly according to claim 12, **characterised in that** the electric pad wear readjustment device (1) comprises at least one pad wear sensor (8).

14. Disc brake assembly according to claim 12 or 13, **characterised in that** the electric pad wear readjustment device (1) comprises at least one feed lever sensor (37).

15. Disc brake assembly according to any of claims 12 to 14, **characterised in that** the control device (51) is arranged on the electric pad wear readjustment device (1).

16. Disc brake assembly according to any of claims 12 to 14, **characterised in that** the control device (51) is a constituent part of a controller (50), for example of a pressure regulating module and/or brake control unit.

17. Disc brake, in particular for a motor vehicle, with an application device with a brake feed lever (9) and at least one readjustment spindle (3), **characterised by** at least one electric pad wear readjustment device (1) of the disc brake assembly according to any of claims 12 to 16.

## Revendications

1. Procédé de commande à commander un dispositif de rattrapage de l'usure de garniture de frein (1) d'un système de freinage à disque, en particulier pour un véhicule à moteur, et un moyen de commande (51) dans lequel le frein à disque comprend un moyen de serrage à un levier de serrage du frein (9), et dans lequel ledit dispositif de rattrapage de l'usure de garniture de frein (1) est accouplé audit levier de serrage du frein (9), en étant inséré, de préférence, dans une broche de rattrapage (3) dudit frein à disque, **caractérisé par** les étapes suivantes:
(S1) détection d'un jeu dudit frein à disque :
(S2) détection d'un changement du jeu par comparaison contre des valeurs déterminées au préalable ;
(S3) commande dudit dispositif de rattrapage de l'usure de garniture de frein (1) par alimentation en courant d'une bobine électromagnétique (16) d'un moyen accoupleur (10) dudit dispositif de rattrapage de l'usure de garniture de frein (1) au cas d'un mouvement dudit levier de serrage du frein (9).

2. Procédé selon la revendication 1, **caractérisé en ce qu'**une distance de serrage de levier (h) dudit levier de serrage du frein (9) est détecté quand le jeu du frein à disque est détecté.

3. Procédé selon la revendication 2, **caractérisé en ce que** quand le jeu du frein à disque est détecté, on établit un point de friction via l'adhérence d'une broche de rattrapage (4) dudit dispositif de rattrapage de l'usure de garniture de frein, par détection de la distance de serrage de levier (h) dudit levier de serrage du frein (9) et le mouvement d'ajustement dudit dispositif de rattrapage de l'usure de garniture de frein (1) quand ladite bobine électromagnétique (16) est alimentée en courant.

4. Procédé selon une quelconque des revendications précédentes, **caractérisé en ce que** quand le jeu du frein à disque est détecté, la pression est mesuré à un point de freinage déterminé au préalable (46, 46', 46"), par rapport à une caractéristique nominale déterminée au préalable (47).

5. Procédé selon la revendication 4, **caractérisé en ce qu'**un point de friction (43, 43', 43") est détecté par l'évaluation d'une pression de freinage statique mesurée (p) en fonction d'un mouvement dudit levier de serrage du frein (9).

6. Procédé selon une quelconque des revendications précédentes, **caractérisé en ce que** la commande dudit dispositif de rattrapage de l'usure de garniture de frein (1) se fait par l'alimentation de ladite bobine électromagnétique (16) en courant au cas d'un mouvement de serrage dudit levier de serrage du frein (9) pour l'ajustage dudit dispositif de rattrapage de l'usure de garniture de frein (1), quand un changement du jeu était détecté comme un élargissement du jeu.

7. Procédé selon une quelconque des revendications précédentes, **caractérisé en ce que** la commande dudit dispositif de rattrapage de l'usure de garniture de frein (1) par alimentation de ladite bobine électromagnétique (16) en courant se fait en cas d'un mouvement de desserrage dudit levier de serrage du frein (9) afin de rappeler ledit dispositif de rattrapage de l'usure de garniture de frein (1), quand un changement du jeu était détecté comme un élargissement du jeu.

8. Procédé selon la revendication 5 ou 6, **caractérisé en ce que** la commande dudit dispositif de rattrapage de l'usure de garniture de frein (1) par alimentation de ladite bobine électromagnétique (16) en courant se fait, quand ledit dispositif de serrage du frein est serré brièvement avant le serrage du frein (49) après le pontage du jeu, au commencement de serrage du frein (49) après le pontage du jeu, au desserrage du dispositif de serrage du frein après le serrage du frein (49) à la fin du desserrage du dispositif de serrage, ou en dehors du serrage du frein (49.

9. Procédé selon une quelconque des revendications précédentes, **caractérisé en ce que** l'alimentation de ladite bobine électromagnétique (16) se fait au moyen d'au moins une impulsion de commutation brève.

10. Procédé selon une quelconque des revendications précédentes, **caractérisé en ce que** l'alimentation de ladite bobine électromagnétique (16) en courant se fait moyennant MLI.

11. Procédé selon une quelconque des revendications précédentes, **caractérisé en ce que** l'alimentation de ladite bobine électromagnétique (16) en courant est utilisée afin de constituer un accouplement de surcharge ajustable.

12. Système de freinage à disque, comprenant un frein à disque, en particulier pur un véhicule à moteur, muni d'un dispositif de serrage du frein avec un levier de serrage du frein (9), d'un dispositif de rattrapage de l'usure de garniture de frein (1), qui est apte, de préférence, à être insérée dans une broche de rattrapage (3) dudit frein à disque, et d'un dispositif de commande (51) à réaliser le procédé selon une quelconque des revendications précédentes, dans lequel ledit dispositif de rattrapage de l'usure de garniture de frein (1) est accouplé audit levier de serrage du frein (9) et comprend les composants suivants:
(a) un arbre de rattrapage (4) à un palier extérieur (26);
(b) un élément d'entraînement en rotation (11) ; et
(c) un dispositif de couplage (10) commutable dudit élément d'entraînement en rotation (11) audit arbre de rattrapage (4),
**caractérisé en ce que**
(d) ledit dispositif de couplage (10) est configuré pour la commutation électrique moyennant au moins une bobine électromagnétique (16).

13. Système de freinage à disque selon la revendication 12, **caractérisé en ce que** ledit dispositif de rattrapage de l'usure de la garniture de frein (1) comprend au moins un détecteur de l'usure de la garniture de frein (8).

14. Système de freinage à disque selon la revendication 12 ou 13, **caractérisé en ce que** ledit dispositif de rattrapage de l'usure de la garniture de frein (1) comprend au moins un détecteur (37) du levier de serrage du frein.

15. Système de freinage à disque selon une quelconque des revendications 12 à 14, **caractérisé en ce que** ledit dispositif de commande (51) est disposé audit dispositif de rattrapage de l'usure de la garniture de frein (1).

16. Système de freinage à disque selon une quelconque des revendications 12 à 14, **caractérisé en ce que** ledit dispositif de commande (51) constitue un composant d'un système de commande (50), par exemple d'un module de commande de pression ou/et d'un dispositif de commande de frein.

17. Frein à disque, en particulier pour un véhicule à moteur, comprenant un dispositif de serrage du frein à un levier de serrage du frein (9) et au moins une broche de rattrapage (3), **caractérisé par** au moins un dispositif de rattrapage de l'usure de garniture de frein (1) dudit système de freinage à disque selon une quelconque des revendications 12 à 16.
